# EUROPÄISCHE PATENTSCHRIFT

(11) **EP 3 383 565 B1**
(45) Veröffentlichungstag und Bekanntmachung des Hinweises auf die Patenterteilung: **09.08.2023**
(21) Anmeldenummer: 16804802.3
(22) Anmeldetag: 01.12.2016
(51) Int. Cl.: B22C 1/20

(54) **VERFAHREN ZUR HERSTELLUNG VON FEUERFESTEN KOMPOSITPARTIKELN UND VON SPEISERELEMENTEN FÜR DIE GIESSEREIINDUSTRIE, ENTSPRECHENDE SPEISERELEMENTE UND VERWENDUNGEN**
METHOD FOR PRODUCING REFRACTORY COMPOSITE PARTICLES AND FEEDER ELEMENTS FOR THE FOUNDRY INDUSTRY, CORRESPONDING FEEDER ELEMENTS AND USES
PROCÉDÉ DE FABRICATION DE PARTICULES COMPOSITES RÉFRACTAIRES ET D'ÉLÉMENTS D'ALIMENTATION POUR L'INDUSTRIE DE LA FONDERIE, ÉLÉMENTS D'ALIMENTATION CORRESPONDANTS ET UTILISATIONS

(30) Priorität: 01.12.2015 DE 102015120866
(43) Veröffentlichungstag der Anmeldung: 10.10.2018
(73) Patentinhaber: HÜTTENES-ALBERTUS Chemische Werke Gesellschaft mit beschränkter Haftung, 40549 Düsseldorf (DE)
(72) Erfinder: LEHMANN, Sandra, 14476 Potsdam (DE); RIEMANN, Klaus, 31515 Wunstorf (DE); ZIMMER, Nils, 30826 Garbsen (DE); LIEBER, Hermann, 30855 Langenhagen (DE); HÜBERT, Jürgen, 30855 Langenhagen (DE)
(74) Vertreter: Eisenführ Speiser
(86) Internationale Anmeldenummer: PCT/EP2016/079371
(87) Internationale Veröffentlichungsnummer: WO 2017/093371

(56) Entgegenhaltungen:
- WO-A2-2011/089130
- CN-B- 103 130 523
- DE-A1-102005 011 644
- DE-A1-102006 030 875
- DE-A1-102012 200 967
- DE-A5-112008 000 701
- JP-A- 2015 199 660
- US-A- 3 341 339
- US-A- 5 948 438
- US-A1- 2015 174 255

## Beschreibung

Die vorliegende Erfindung betrifft ein Verfahren zur Herstellung eines Speiserelements für die Gießereiindustrie, ein entsprechendes Speiserelement, die Verwendung eines Matrixverkapselungsverfahrens zur Herstellung von Kompositpartikeln und die Verwendung von versiegelten Kompositpartikeln. Die Erfindung betrifft auch ein Verfahren zur Herstellung von feuerfesten Kompositpartikeln und deren Verwendung. Die Erfindung ist in den beigefügten Ansprüchen und den korrespondierenden Passagen der Beschreibung definiert.

Der Begriff "Speiser" oder "Speiserelement" umfasst im Rahmen der vorliegenden Unterlagen sowohl Speiserumhüllungen, Speisereinsätze und Speiserkappen als auch Heizkissen.

Bei der Herstellung von metallischen Formteilen in der Gießerei wird flüssiges Metall in eine Gießform eingefüllt und erstarrt dort. Der Erstarrungsvorgang ist mit einer Verringerung des Metallvolumens verbunden und es werden deshalb regelmäßig Speiser, das heißt offene oder geschlossene Räume in oder an der Gießform eingesetzt, um das Volumendefizit bei der Erstarrung des Gussstücks auszugleichen und so eine Lunkerbildung im Gussstück zu verhindern. Speiser sind mit dem Gussstück beziehungsweise mit dem gefährdeten Gussstückbereich verbunden und befinden sich für gewöhnlich oberhalb und/oder an der Seite des Formhohlraums. In Speisermassen zur Herstellung von Speisern und in dem daraus hergestellten Speisern selbst, werden heute regelmäßig Leichtfüllstoffe eingesetzt, welche bei einer hohen Temperaturbeständigkeit und geringem Gewicht eine gute isolierende Wirkung zeigen sollen.

Isolierende und exotherme Speiser und Speisermassen beinhalten als hauptsächlichen Bestandteil einen oder auch mehrere feuerfeste Füllstoffe. Diese bilden einerseits die Gerüststruktur eines Speisers und sind andererseits in hohem Maße für die Isolierungswirkung bzw. den positiven Wärmehaushalt im Speiser und damit für eine gute Wirksamkeit des Speiser ausschlaggebend.

Neben der Schüttdichte ist die thermische Beständigkeit eines der wichtigsten Kriterien für die Auswahl eines geeigneten feuerfesten Füllstoffes für Speiser. Dabei bestimmt die Art der Speisermasse, ob isolierend oder exotherm wirksam, sowie der Einsatzbereich der Speiser maßgeblich die Anforderungen an den feuerfesten Füllstoff.

EP 2 139 626 B1 betrifft ein "schüttfähiges Füllmaterial zur Verwendung als Füllstoff für Speisermassen zur Herstellung von Speisern" (vergleiche Anspruch 1). Das Füllmaterial umfasst Kern-Hülle-Partikel In Abschnitt [0023] wird eine bevorzugte Schüttdichte von 85 g/L bis 500 g/L offenbart.

WO 2013/014118 A2 betrifft einen "Speiser und formbare Zusammensetzung zu deren Herstellung" (Bezeichnung). Es wird Reisschalenasche als Füllstoff eingesetzt.

DE 10 2012 200 967 A1 betrifft "Speiser und formbare Zusammensetzung zu deren Herstellung enthaltend kalzinierte Kieselgur" (Bezeichnung). Die beanspruchten Speiser werden unter anderem nach dem Polyurethan-Cold-Box-Verfahren hergestellt. Der offenbarte kalzinierte Kieselgur soll dabei eine Schüttdichte von 600 g/L oder mehr haben.

CN 103 130 523 B betrifft ein Speisermaterial und ein Herstellungsverfahren dafür.

Weiterer zu berücksichtigender Stand der Technik ist offenbart in
US 2012/0295026 A1,
DE 10 2010 045 479 A1 und
DE 11 2008 000 701 B4.

In der industriellen Praxis werden in Speisern häufig Spheres (insbesondere solche aus Flugasche) eingesetzt. Diese lassen sich in verschiedene Qualitätsstufen einteilen, die sich insbesondere durch den Al₂O₃-Gehalt und den Anteil an Alkalien- und Erdalkalien sowie Begleitelementen wie Eisen ergeben. Insbesondere für den Einsatzbereich Kupfer-, Eisen- und Stahlguss werden in der Praxis besonders hochwertige Spheresqualitäten benötigt; diese sind jedoch mengenmäßig begrenzt bzw. sehr teuer, so dass ein beständiger Bedarf an reproduzierbar verfügbaren Alternativen besteht.

Als Leichtfüllstoffe bekannt sind z.B. Blähglas der Fa. Liaver und Schaumglas der Fa. Poraver, Glashohlkugeln des Typs K20 der Fa. Omega sowie geblähte Perlite. Diese Rohstoffe sind jedoch regelmäßig im Kupfer- und Eisenguss und insbesondere im Stahlguss und im Guss mit exothermen Massen ohne weitere Veredelung (wie z.B. die Applikation einer feuerfesten Umhüllung) nicht nutzbar, da die Schmelzpunkte der Rohstoffe unter 1000°C, meistens aber im Bereich 700 bis 900°C liegen und diese Temperatur beim Guss überschritten wird (siehe auch die nachfolgende, Tabelle "Erforderliche thermische Beständigkeit").

**Tabelle "Erforderliche thermische Beständigkeit"**

| **Gussart in der Speiserindustrie** | **Aluminiumguss** | **Kupferguss** | **Eisenguss** | **Stahlguss** | **exotherme Massen** |
|---|---|---|---|---|---|
| minimal erforderliche thermische Beständigkeit | 800 °C | 1200 °C | 1400 °C | 1500 °C | 1700 °C |

Ein Rohstoff, der eine thermische Beständigkeit bis ca. 2000°C aufweist und demnach in Speisern für Kupfer-, Eisen- und Stahlguss einsetzbar ist, ist Hohlkugelkorund (Al₂O₃). Aufgrund seiner hohen Schüttdichte von ca. 750 bis 1000 g/L (abhängig vom Herstellverfahren) ist der Einsatz von Hohlkugelkorund in Speisern jedoch regelmäßig nicht ökonomisch. Zudem ist die gute Wärmeleitfähigkeit des Hohlkugelkorundes nachteilig für den Einsatz in Speisern, bei denen eine gute Isolierwirkung ja entscheidend ist.

Gängige Rohstoffe für Speiser sind Quarzsand und Schamotte. Diese kostengünstigen Rohstoffe liegen hinsichtlich der thermischen Beständigkeit zwar im Temperaturbereich von 1700-1800°C, besitzen aber hohe Schüttdichten und vergleichsweise schlechte Isoliereigenschaften. Ein feuerfester Isolierrohstoff für Speiser zur Verwendung im Eisen- und Stahlguss mit geringerer Schüttdichte als Hohlkugelkorund, Quarzsand und Schamotte sind Kern-Hülle-Partikel der Chemex GmbH. Diese Partikel besitzen einen Glaskern und eine feuerfeste Hülle, die Schüttdichte liegt häufig im Bereich von 470-500 g/L. Die vorstehend angegebenen Schüttdichten werden für manche Zwecke als noch immerzu hoch empfunden.

In eigenen Untersuchungen hat sich gezeigt, dass die Form der (Leicht-)Füllstoffe in einem Speiserelement für die Gießereiindustrie einen erheblichen Einfluss auf dessen mechanische Eigenschaften (Festigkeit, Gasdurchlässigkeit, etc.) hat. Sphärische Leichtfüllstoffe sind zum Erreichen hoher Festigkeiten und Gasdurchlässigkeiten in vielen Fällen bevorzugt.

Es war eine primäre Aufgabe der vorliegenden Erfindung, ein verbessertes Verfahren zur Herstellung eines Speiserelements für die Gießereiindustrie anzugeben, welches ohne besondere Mühe an die praktischen Erfordernisse hinsichtlich der Eigenschaften der im Speiser vorhandenen Partikel angepasst werden kann. Das anzugebende Verfahren sollte zu einem Speiser führen, der Partikel mit einer Korngröße von weniger als 2 mm umfasst. Die Partikel sollten -abhängig von der individuellen Ausgestaltung des anzugebenden Verfahrens- eine geringe Schüttdichte und/oder eine hohe thermische Beständigkeit besitzen.

Vorzugsweise sollte das anzugebende Verfahren den Einsatz bzw. die Herstellung von Füllstoffpartikeln umfassen bzw. ermöglichen, welche eine oder mehrere, vorzugsweise sämtliche der nachfolgenden Eigenschaften besitzen:
- eine besonders hohe thermische Beständigkeit,
- ein ausgezeichnetes Isolationsverhalten,
- eine gute Schüttfähigkeit
- eine hohe Sphärizität
- Rieselfähigkeit
   und
- eine Schüttdichte von weniger als 350 g/L.

Das anzugebende Verfahren zur Herstellung eines Speiserelements für die Gießereiindustrie sollte flexibel einstellbar sein hinsichtlich der Herstellung und des Einsatzes von Füllstoffpartikeln variabler Größe; insbesondere sollte das Verfahren die Herstellung und den Einsatz von Füllstoffpartikeln mit einer Korngröße von weniger als 2 mm (vorzugsweise weniger als 0,8 mm) bei der Herstellung eines Speiserelements ermöglichen. Die herzustellenden und einzusetzenden Füllstoffpartikel sollten variabel zusammengesetzt werden können. Durch diese Variabilität und Flexibilität des anzugebenden Verfahrens soll es möglich sein, ein Speiserelement herzustellen, dessen Materialeigenschaften individuell an die Bedürfnisse des Einzelfalles angepasst sind. Das anzugebende Verfahren zur Herstellung eines Speiserelements für die Gießereiindustrie soll somit von der Marktverfügbarkeit von Füllstoffpartikeln definierter Größe und Zusammensetzung unabhängiger sein als die bisherigen Verfahren zur Herstellung eines Speiserelements für die Gießereiindustrie.

Insbesondere sollte das anzugebende Verfahren zur Herstellung eines exothermen Speiserelements und eines exothermen oder isolierenden (nicht exothermen) Speiserelements für den Einsatz beim Eisen-, Stahl- oder Kupferguss geeignet sein.

Es war eine weitere Aufgabe der vorliegenden Erfindung, ein entsprechendes Speiserelement anzugeben. Weitere Aufgaben der vorliegenden Erfindung ergeben sich, mutatis mutandis, aus den vorstehenden Ausführungen und ergeben sich aus den entsprechenden Erläuterungen im nachfolgenden Text.

Die gestellte primäre Aufgabe hinsichtlich des anzugebenden Verfahrens wird erfindungsgemäß gelöst durch ein Verfahren zur Herstellung eines Speiserelements für die Gießereiindustrie, umfassend die folgenden Schritte:
(a) Herstellen von (vorzugsweise feuerfesten, bevorzugt hochfeuerfesten) Kompositpartikeln mit einer Korngröße von weniger als 2 mm, bestimmt mittels Siebung, in einem Matrixverkapselungsverfahren mit den folgenden Schritten:
   (a1) Herstellen von Tropfen einer Suspension aus zumindest den folgenden Startmaterialien:
      (i) ein oder mehrere Feuerfestsubstanzen ausgewählt aus der Gruppe bestehend aus
         feuerfeste Feststoffe und Präkursoren für feuerfeste Feststoffe,
      (ii) ein oder mehrere dichtereduzierende Substanzen ausgewählt aus der Gruppe bestehend aus
         Leichtfüllstoffe mit einer jeweiligen Schüttdichte im Bereich von 10 bis 350 g/L, vorzugsweise im Bereich von 10 bis 250 g/L, ganz besonders bevorzugt im Bereich von 10 bis 100g/L, Blähmittel und pyrolysierbare Füllstoffe,
      (iii) als kontinuierliche Phase eine verfestigbare Flüssigkeit,
   (a2) Verfestigen der verfestigbaren Flüssigkeit, so dass die Tropfen zu gehärteten Tropfen härten und der beziehungsweise die Feuerfestsubstanzen sowie der beziehungsweise die dichtereduzierenden Substanzen in der sich verfestigenden kontinuierlichen Phase eingekapselt werden,
   (a3) Behandeln (vorzugsweise Wärmebehandeln) der gehärteten Tropfen, so dass die besagten Kompositpartikel resultieren,
(b) Mischen der in Schritt (a) hergestellten Kompositpartikel oder einer Fraktion dieser Kompositpartikel mit einem Bindemittel sowie optional weiteren Bestandteilen zu einer Speisermasse,
(c) Formen und Aushärten der Speisermasse zu einem Speiserelement.

Die Erfindung beruht auf der Erkenntnis, dass durch Matrixverkapselung (Einkapseln) der in Schritt (a1) angegebenen Startmaterialien (siehe Punkt (i) bis (iii) in Schritt (a1)) Kompositpartikel hergestellt werden können, welche die oben aufgeführten primären Eigenschaften besitzen.

Die im erfindungsgemäßen Verfahren hergestellten Kompositpartikel besitzen eine Korngröße von weniger als 2 mm, bestimmt mittels Siebung. Die Bestimmung mittels Siebung erfolgt gemäß DIN 66165-2 (4.1987) unter Anwendung des dort genannten Verfahrens F (Maschinensiebung mit bewegtem Einzelsieb oder Siebsatz in gasförmigem ruhendem Fluid). Es wird eine Vibrationssiebmaschine des Typs RETSCH AS 200 control eingesetzt; dabei wird die Amplitude auf die Stufe 2 eingestellt; es erfolgt keine Intervallsiebung, die Siebdauer beträgt 1 Minute.

Der Begriff "Feuerfeste Feststoffe" umfasst Feststoffe, welche gemäß DIN 51060 als "feuerfest" zu bezeichnen sind; der Begriff "Feuerfeste Feststoffe" umfasst zudem die Feststoffe aus der Gruppe bestehend aus Aluminiumoxid, Zirkoniumoxid, Titandioxid, Graphit, Siliziumdioxid, Magnesiumoxid, Calciumoxid, Calciumsilikat, Schichtsilikate (vorzugsweise Glimmer), Aluminiumsilikate, Magnesiumaluminiumsilikat (vorzugsweise Cordierit), Siliziumcarbid, Bornitrid, Mischoxide, welche ein oder mehrere Metall-Atome der zuvor genannten Metalloxide enthalten, und Mischsilikate, welche ein oder mehrere Metall-Atome der zuvor genannten Metallsilikate enthalten.

"Präkursoren für feuerfeste Feststoffe" sind Materialien, die beim Behandeln der gehärteten Tropfen (Schritt (a3)) in "Feuerfeste Feststoffe", wie vorstehend definiert, übergehen, z.B. durch eine Wärmebehandlung.

Im Rahmen der vorliegenden Erfindung gilt ein Partikel oder Material (z.B. eine Menge von Partikeln gleicher Zusammensetzung) als thermisch beständig, wenn der Partikel oder das Material unterhalb einer gegebenen Temperaturobergrenze (z. B. 1600 °C oder 1700 °C) weder schmilzt, noch unter Verlust der räumlichen Gestalt erweicht oder sich gar zersetzt. Eine Menge von Partikeln gleicher Zusammensetzung gilt insbesondere dann als thermisch beständig, wenn sie bei einer bestimmten Temperatur im Sintertest nicht versintert. Zur Durchführung des Sintertests siehe unten "Methode zur Bestimmung der thermischen Beständigkeit (Sintertest)".

Das Merkmal "Herstellen von Tropfen einer Suspension aus zumindest den folgenden Startmaterialien" umfasst das "Herstellen von Tropfen einer Suspension aus ausschließlich den folgenden Startmaterialien" sowie das "Herstellen von Tropfen einer Suspension aus den folgenden Startmaterialien und weiteren Startmaterialien".

Unter einem "Matrix-Verkapselungsverfahren" wird im vorliegenden Text ein Verfahren verstanden, in dem zunächst Tropfen einer Dispersion hergestellt werden, wobei die Dispersion eine im festen oder flüssigen Zustand vorliegende Substanz umfasst, die in einer Matrix (kontinuierliche Phase) suspendiert ist. Aus den Tropfen werden durch Verfestigen und gegebenenfalls anschließendes Behandeln Kompositpartikel erzeugt. Das erfindungsgemäße Verfahren umfasst in seinem Schritt (a) ein spezifisches Matrix-verkapselungsverfahren mit den vorstehend definierten Teil-Schritten. Vom Matrix-Verkapselungsverfahren unterscheidet sich ein typisches Verfahren zur Herstellung von Kern-Hülle-Partikeln dadurch, dass in Kern-Hülle-Partikeln das Hüllmaterial nur einen einzigen Kern umhüllt. Dieser einzige Kern eines typischen Kern-Hülle-Partikels umfasst üblicherweise kein Bindemittel, welches sonstige Bestandteile des Kerns bindet. Üblicherweise, und das gilt insbesondere auch für die mittels des spezifischen Matrix-Verkapselungsverfahrens gemäß Schritt (a) des erfindungsgemäßen Verfahrens hergestellten Kompositpartikel, umfasst ein mittels des Matrix-Verkapselungsverfahrens hergestelltes Kompositpartikel mehr als 5, vorzugsweise mehr als 50 diskrete Mikropartikel bestehend aus feuerfestem Feststoff; zu bevorzugten feuerfesten Feststoffen siehe weiter unten. Derartige Kompositpartikel sind erfindungsgemäß bevorzugt.

"Dichtereduzierende Substanzen" sind Substanzen, deren Einsatz im erfindungsgemäßen Verfahren dazu führt, dass eine verringerte Schüttdichte der in Schritt (a3) resultierenden Kompositpartikel erreicht wird, im Vergleich mit einem nicht-erfindungsgemäßen (Vergleichs-)Verfahren, welches auf identische Weise durchgeführt wird, in dem jedoch zum Zwecke des Vergleichs diese "dichtereduzierenden Substanzen" nicht eingesetzt werden. Abhängig von der Behandlung eines gehärteten Tropfens kann ein eingesetztes Blähmittel oder ein eingesetzter pyrolysierbarer Füllstoff blähen bzw. pyrolysiert werden oder auch nicht. Nur wenn (in Schritt (a3)) ein eingesetztes Blähmittel bläht oder ein eingesetzter pyrolysierbarer Füllstoff pyrolysiert wird, erfüllt er das Kriterium "dichtereduzierend".

Erfindungsgemäß eingesetzte "Leichtfüllstoffe" sind Füllstoffe, die jeweils eine Schüttdichte im Bereich von 10 bis 350 g/L aufweisen. In der Gießerei typischerweise eingesetzte und zur Verwendung im erfindungsgemäßen Verfahren bevorzugte Leichtfüllstoffe sind
- Spheres, vorzugsweise Spheres aus Flugasche, wie z.B. Spheres "Fillite 106" der Fa. Omya GmbH,
- geblähter Perlit wie z.B. geblähter Perlit mit den Namen "Eurocell 140", "Eurocell 145", "Eurocell 150" oder "Eurocell 300" der Fa. RS Rohstoff-Sourcing GmbH
   oder
- Glas wie z.B. das Glas mit dem Namen "GHL 450" der Fa. LUH Georg H. Luh GmbH, das Produkt mit dem Namen "JJ Glass Bubbles" der Fa. Jebsen &Jessen GmbH&Co. KG, das Produkt mit dem Namen "Q-cel^{®}300" der Fa. Potters Industries oder die Produkte "K1", "K15" oder "K20" der Fa. 3M.

"Blähmittel" sind Substanzen, die beim Behandeln der gehärteten Tropfen in Schritt (a3), z.B. beim Erhitzen, aufblähen oder Blähgase freisetzen und dadurch Hohlräume im Kompositpartikel erzeugen.

"Pyrolysierbare Füllstoffe" sind Füllstoffe, die beim Behandeln der gehärteten Tropfen in Schritt (a3), z.B. beim Erhitzen, teilweise oder vollständig, vorzugsweise vollständig, pyrolysiert werden.

Ein pyrolysierbarer Füllstoff kann gleichzeitig ein Leichtfüllstoff mit einer jeweiligen Schüttdichte im Bereich von 10 bis 350 g/L sein. Ein pyrolysierbarer Füllstoff kann gleichzeitig ein Blähmittel sein. Ein Blähmittel kann gleichzeitig ein Leichtfüllstoff mit einer jeweiligen Schüttdichte im Bereich von 10 bis 350 g/L sein.

Kompositpartikel, die in Schritt (a) des erfindungsgemäßen Verfahrens hergestellt werden, besitzen aufgrund des Einsatzes der dichtereduzierenden Substanzen in Schritt (ii) eine besonders geringe, aber individuell gemäß den Bedürfnissen des Einzelfalls eingestellte Schüttdichte und insbesondere bei Einsatz von Blähmitteln und/oder pyrolysierbaren Füllstoffen eine hohe, aber individuell gemäß den Bedürfnissen des Einzelfalls eingestellte Porosität, so dass die resultierenden individuell hergestellten Kompositpartikel eine hohe Isolationswirkung bei gleichzeitig geringer Schüttdichte besitzen.

In Schritt (b) des erfindungsgemäßen Verfahrens werden die in Schritt (a) hergestellten Kompositpartikel oder eine Fraktion dieser Partikel mit einem Bindemittel sowie optional weiteren Bestandteilen zu einer Speisermasse gemischt. Eine Fraktion der in Schritt (a) hergestellten Kompositpartikel kann dabei auf beliebige Weise abgetrennt werden, mit oder ohne Beschränkung auf Kompositpartikel mit einer definierten Korngröße. Insbesondere wenn aus den in Schritt (a3) resultierenden Kompositpartikeln nur solche mit einer definierten Korngröße in Schritt (b) eingesetzt werden sollen, ist ein Fraktionieren mittels Siebung bevorzugt.

In einem erfindungsgemäßen Verfahren zur Herstellung eines Speiserelements für die Gießereiindustrie, werden in Schritt (b) vorzugsweise ein oder mehrere Bindemittel eingesetzt, welche ausgewählt sind aus der Gruppe bestehend aus:
- organische Bindemittel, z.B. (i) Cold-Box-Bindemittel-Komponenten, vorzugsweise Komponenten eines 2-Komponenten-Bindemittelsystems zur Herstellung eines Polyurethans aus einem Benzyletherharz und einem Polyisocyanat, (ii) Hot-Box-Bindemittel-Komponenten, (iii) Stärke und (iv) Polysacharide
   und
- anorganische Bindemittel, z.B. Wasserglas, gegebenenfalls in Kombination mit amorphem Siliziumdioxid.

Insbesondere bevorzugt ist hierbei ein erfindungsgemäßes Verfahren, wobei die Gesamtmenge der in Schritt (b) eingesetzten Bindemittel im Bereich von 1 bis 50 Gew.-% liegt, besonders bevorzugt im Bereich von 5 bis 30 Gew.-%, insbesondere bevorzugt im Bereich von 10 bis 20 Gew.-%, bezogen auf die Gesamtmasse der in Schritt (b) hergestellten Speisermasse.

Im Zusammenhang mit der vorliegenden Erfindung sei auf die folgenden Literaturstellen verwiesen, die der Fachmann abhängig von den Bedürfnissen des Einzelfalls berücksichtigen wird.

DE 2 214 073 A1 offenbart "Verfahren und Vorrichtung zur Herstellung von geblähten keramischen Erzeugnissen" (Titel). Die keramischen Erzeugnisse haben dabei vorzugsweise einen Durchmesser von unter 5 mm und Schüttdichten von 0,1 bis 1 kg/L.

DE 2 418 027 A1 betrifft "Gebilde aus Titandioxyd" (Bezeichnung) DE 2 714 139 A1 betrifft ein "Verfahren zur Herstellung eines feuerfesten Materials".GB 2 034 678 B betrifft "Balls containing tungsten carbide" (Titel).

DE 69 122 393 T (entsprechend EP 0 538 350 B1) betrifft "Konglomeratträgermaterial" (Titel). Die Herstellung dieses Materials kann dabei durch die Zugabe geeigneter Metallionen zu Alginaten erfolgen.

DE 69 424 232 T2 (entsprechend EP 0 639 544 B1) betrifft "Netzartige Keramikpartikel" (Titel).

DE 19 706 743 A1 betrifft "Feuerbeständiges Stoffgemenge" (Titel).

DE 19830795 A1 betrifft "Poröse Keramiken" (Titel).

DE 699 14 207 T (entsprechend EP 1 117 626 B1) betrifft "Schaumkeramik" (Bezeichnung).

DE 69 817 009 T (entsprechend EP 1030734 B1) betrifft ein "verkapseltes aktives Material in einer Alginatmatrix" (Bezeichnung).

DE 10 058 221 A1 betrifft "Verfahren und Vorrichtung zur Herstellung von Alginatkugeln mit großer Festigkeit".

DE 60 103 638 T (entsprechend EP 1 280 732 B1) betrifft "Kalziumphosphatmikrogranulate" (Bezeichnung).

DE 10 217 138 betrifft "Sphärische Partikel aus Actinidenoxiden".

EP 1 794 277 B1 betrifft "Wasch- und Reinigungsmittel mit immobilisierten aktiven Inhaltsstoffen" (Titel). DE 10 2008 036 094 A1 offenbart "sphärische Halbleitermetall Granulate" (Bezeichnung).

DE 4 125 133 C2 betrifft "Verfahren und Vorrichtung zur Herstellung von Alginatkugeln" (Titel).

Bevorzugt ist ein erfindungsgemäßes Verfahren, wie vorstehend beschrieben (insbesondere ein Verfahren, das vorstehend oder nachfolgend als bevorzugt bezeichnet ist), wobei
in Schritt (a1) das Herstellen von Tropfen mittels einer oder mehrerer Düsen, vorzugsweise Vibrationsdüsen, erfolgt
   und/oder
in Schritt (a2) das Verfestigen der verfestigbaren Flüssigkeit durch Abkühlen, Trocknen oder chemische Reaktion induziert wird.

Die Verwendung von einer oder mehreren Düsen, vorzugsweise Vibrationsdüsen, ist dabei in Schritt (a1) bevorzugt, um die Kompositpartikel zeiteffizient und mit einer möglichst gleichmäßigen Korngröße herzustellen.

Ein erfindungsgemäßes Verfahren wie vorstehend beschrieben (insbesondere ein Verfahren, das vorstehend oder nachfolgend als bevorzugt bezeichnet ist) ist bevorzugt, wobei die in Schritt (a1) eingesetzte verfestigbare Flüssigkeit eine durch chemische Reaktion verfestigbare Flüssigkeit ist und in Schritt (a2) das Verfestigen der verfestigbaren Flüssigkeit durch chemische Reaktion induziert wird.

Das Verfestigen der verfestigbaren Flüssigkeit durch chemische Reaktion hat den Vorteil, dass dieser Vorgang in der Regel irreversibel ist und zudem schnell genug ist, sodass beim Eintropfen und damit beim Verfestigen der verfestigbaren Flüssigkeit die verfestigbare Flüssigkeit in der Regel die Form des Tropfens beibehält. Verfestigungen durch physikalische Methoden, wie z.B. Abkühlen oder Trocknen, sind in manchen Fällen reversibel und können in diesen Fällen z.B. durch die Zufuhr von Wärme oder Feuchtigkeit (zumindest teilweise) rückgängig gemacht werden.

Besonders bevorzugt ist ein erfindungsgemäßes Verfahren wie vorstehend beschrieben (insbesondere ein Verfahren, das vorstehend oder nachfolgend als bevorzugt bezeichnet ist), wobei die verfestigbare Flüssigkeit eine durch Kationenaustauschreaktion verfestigbare Flüssigkeit ist, vorzugsweise eine durch Reaktion mit Calciumionen und/oder Bariumionen und/oder Mangan-Ionen, bevorzugt durch Reaktion mit Calciumionen, verfestigbare Flüssigkeit ist.

Kationenaustauschreaktionen besitzen in der Praxis den Vorteil, dass sie regelmäßig in einem vergleichsweise kurzen Zeitraum abgeschlossen sind.

Bevorzugt ist dabei in Schritt (a2) die Durchführung einer Kationenaustauschreaktion, bei der die verfestigbare Flüssigkeit einwertige Kationen enthält und mit Calciumionen in Kontakt gebracht wird, um so die verfestigbare Flüssigkeit zu verfestigen; anstelle von Calciumionen können aber auch Bariumionen oder Manganionen eingesetzt werden. In der verfestigbaren Flüssigkeit enthaltene einwertige Kationen werden bei der bevorzugten Vorgehensweise gegen Calciumionen ausgetauscht, um so die verfestigbare Flüssigkeit zu verfestigen. Calciumionen besitzen ein ausgewogenes Verhältnis zwischen Ladung und lonenbeweglichkeit. Generell gilt nämlich: Die Ladung des Kations, welches mit dem in der verfestigbaren Flüssigkeit vorliegenden einwertigen Kation ausgetauscht werden soll, sollte möglichst hoch sein, damit beim Kationenaustausch schwerlösliche Verbindungen entstehen. Das Kation soll dabei aber auch eine möglichst hohe lonenbeweglichkeit aufweisen, damit die erwünschte chemische Reaktion möglichst schnell abläuft. Die lonenbeweglichkeit von Kationen nimmt mit zunehmender Kationenladung ab.

Besonders bevorzugt ist ein erfindungsgemäßes Verfahren wie vorstehend beschrieben (insbesondere ein Verfahren, das vorstehend oder nachfolgend als bevorzugt bezeichnet ist), wobei die verfestigbare Flüssigkeit eine durch Reaktion mit Calciumionen verfestigbare Flüssigkeit ist,
die ein oder mehrere Bindemittel umfasst ausgewählt aus der Gruppe bestehend aus Alginat, PVA, Chitosan und Sulfoxyethylcellulose,
und/oder (vorzugsweise "und")
eine wässrige Lösung ist,
wobei die verfestigbare Flüssigkeit vorzugsweise eine wässrige Alginatlösung ist,
wobei die verfestigbare Flüssigkeit besonders bevorzugt eine wässrige Natriumalginatlösung ist.

Alginatlösungen, insbesondere Natriumalginatlösungen, vorzugweise in Form einer wässrigen Lösung, eignen sich besonders für den Einsatz als eine durch Reaktion mit Calciumionen verfestigbare Flüssigkeit in einem erfindungsgemäßen Verfahren, da sie umweltfreundlich, abbaubar und insbesondere nicht giftig sind. Zudem lassen sich solche Alginatlösungen reproduzierbar und standardisiert verfestigen. Die in eigenen Untersuchungen erhaltenen Kompositpartikel, zu deren Herstellung Alginatlösungen als verfestigbare Flüssigkeit eingesetzt wurde, besaßen einen einheitlichen Aufbau mit gleichmäßig verteilten bzw. angeordneten Partikeln von Feuerfestsubstanzen.

Bevorzugt ist ein erfindungsgemäßes Verfahren wie vorstehend beschrieben (insbesondere ein Verfahren, das vorstehend oder nachfolgend als bevorzugt bezeichnet ist), wobei
der beziehungsweise zumindest einer der in Schritt (a) als dichtereduzierende Substanz der Komponente (ii) eingesetzten Leichtfüllstoffe, bevorzugt mit einer Korngröße kleiner als 0,8 mm, besonders bevorzugt kleiner als 0,5 mm, ganz besonders bevorzugt kleiner als 0,3 mm, bestimmt mittels Siebung (zur Bestimmungsmethode siehe oben), ausgewählt ist aus der Gruppe bestehend aus:
   anorganischen Hohlkugeln, organischen Hohlkugeln, Partikeln aus porösem und/oder geschäumtem Material, Reisschalenasche, Kern-Hülle-Partikeln und kalziniertem Kieselgur
   und/oder
wobei das beziehungsweise zumindest eines der in Schritt (a) als Komponente (ii) eingesetzten Blähmittel ausgewählt ist aus der Gruppe bestehend aus:
   - Carbonate, Hydrogencarbonate und Oxalate, vorzugsweise mit Kationen aus der Gruppe bestehend aus Alkalimetallen und Erdalkalimetallen, bevorzugt Calcium-Carbonate, -Hydrogencarbonate und -Oxalate,
   - Kokosnussschalenmehl, vorzugsweise Kokosnussschalenmehl mit dem Namen "Coconit 300" der Fa. Mahlwerk Neubauer-Friedrich Geffers GmbH,
   - Walnussschalenmehl, vorzugsweise Walnussschalenmehl mit dem Namen "Walnusschalenmehl 200m" der Fa. Ziegler Minerals,
   - Traubenkernmehl, vorzugsweise Traubenkernmehl mit dem Namen "Traubenkernmehl M100" der Fa. A+S BioTec,
   - Olivenkernmehl, vorzugsweise Olivenkernmehl mit den Namen "OM2000" oder "OM3000" der Fa. JELU-Werk,
   - Stärke,
   - Weizenmehl, vorzugsweise Weizenmehl mit dem Namen "Mehl 405" der Fa. Hummel,
   - Maismehl, vorzugsweise Maismehl mit dem Namen "Maismehl "MK100" der Fa. Hummel,
   - Kartoffeldextrin,
   - Zucker, z.B. Saccharose,
   - Pflanzensamen,
   - Holzmehl, vorzugsweise Holzmehl mit dem Namen "Holzmehl Ligno-Tech 120mesh TR " der Fa. Brandenburg Holzmühle,
      und
   - Reisschalenasche, vorzugsweise Reisschalenasche mit einem hohen Anteil an Kohlenstoff, z.B. eine Reisschalenasche mit dem Namen "Nermat AF (<80µm)" der Fa. Refratech,
   und/oder
wobei das beziehungsweise zumindest einer der in Schritt (a) als Komponente (ii) eingesetzten pyrolysierbaren Füllstoffe ausgewählt ist aus der Gruppe bestehend aus:
   - Kunststoffperlen, vorzugsweise Kunststoffperlen "Expancel^{®} 091 DE 80 d30" der Fa. Akzo Nobel oder Kunststoffperlen "SPHERE ONE EXTENDOSPHERES^{™} PM 6550 Hollow Plastic Spheres" der Fa. KISH Company Inc.
      und
   - Styroporkugeln, vorzugsweise Styroporkugeln "F655-N" der Fa. BASF.

Insbesondere bevorzugt ist ein erfindungsgemäßes Verfahren wie vorstehend beschrieben (insbesondere ein Verfahren, das vorstehend oder nachfolgend als bevorzugt bezeichnet ist), wobei
die Gesamtmenge der eingesetzten Leichtfüllstoffe im Bereich bis 30 Gew.-% besonders bevorzugt im Bereich von 1 bis 10 Gew.-%, insbesondere bevorzugt im Bereich von 3 bis 5 Gew.-% liegt, bezogen auf die Gesamtmasse der in Schritt (a1) hergestellten Suspension,
   und/oder
die Gesamtmenge der eingesetzten Blähmittel im Bereich bis 30 Gew.-%, besonders bevorzugt im Bereich von 1 bis 20 Gew.-%, insbesondere bevorzugt im Bereich von 3 bis 10 Gew.-% liegt, bezogen auf die Gesamtmasse der in Schritt (a1) hergestellten Suspension,
   und/oder
die Gesamtmenge der eingesetzten pyrolysierbaren Füllstoffe im Bereich bis 30 Gew.-%, besonders bevorzugt im Bereich von 1 bis 20 Gew.-%, insbesondere bevorzugt im Bereich von 3 bis 10 Gew.-% liegt, bezogen auf die Gesamtmasse der in Schritt (a1) hergestellten Suspension.

Vorzugsweise liegt die Gesamtmenge der eingesetzten dichtereduzierenden Substanzen

im Bereich von 3 bis 10 Gew.-%, bezogen auf die Gesamtmasse der in Schritt (a1) hergestellten Suspension,

Die vorstehenden als Komponente (ii) eingesetzten pyrolysierbaren Füllstoffe können einzeln oder in Kombination eingesetzt werden.

Besonders bevorzugt ist ein erfindungsgemäßes Verfahren, wobei zumindest eines der in Schritt (a) als Komponente (ii) eingesetzten Blähmittel ausgewählt ist aus der Gruppe bestehend aus:
- Holzmehl, vorzugsweise Holzmehl mit dem Namen "Holzmehl Ligno-Tech 120mesh TR " der Fa. Brandenburg Holzmühle,
- Maismehl, vorzugsweise Maismehl mit dem Namen "Maismehl "MK100" der Fa. Hummel,
- Zucker, z.B. Saccharose.
Die vorstehenden als Komponente (ii) eingesetzten Blähmittel können einzeln oder in Kombination eingesetzt werden.

Die vorstehend genannten dichtereduzierenden Substanzen (wie z.B. Leichtfüllstoffen, Blähmittel oder pyrolysierbare Füllstoffe) zur Herstellung von Kompositpartikeln mit besonders niedriger Schüttdichte sind auf dem Markt im hohen Maße verfügbar. Ihr Einsatz im erfindungsgemäßen Verfahren ermöglicht die reproduzierbare Herstellung von leichten, gut isolierenden Speiserelementen für die Gießereiindustrie.

Bevorzugt ist ein erfindungsgemäßes Verfahren wie vorstehend beschrieben (insbesondere ein Verfahren, das vorstehend oder nachfolgend als bevorzugt bezeichnet ist), wobei
der beziehungsweise zumindest einer der in Schritt (a1) als Feuerfestsubstanz der Komponente (i) eingesetzten feuerfesten Feststoffe ausgewählt ist aus der Gruppe bestehend aus:
   - Oxide, Nitride und Carbide, jeweils umfassend ein oder mehrere Elemente aus der Gruppe bestehend aus Si, Al, Zr, Ti, Mg und Ca,
   - Mischoxide, Mischcarbide und Mischnitride, jeweils umfassend ein oder mehrere Elemente aus der Gruppe bestehend aus Si, Al, Zr, Ti, Mg und Ca,
      und
   - Graphit,
wobei vorzugsweise der beziehungsweise zumindest einer der in Schritt (a1) als Feuerfestsubstanz der Komponente (i) eingesetzten feuerfesten Feststoffe ausgewählt ist aus der Gruppe bestehend aus:
   - Aluminiumoxid (z.B. CAS-Nr. 21645-51-2),
   - Zirkoniumoxid (z.B. CAS-Nummer 1314-23-4),
   - Titandioxid (z.B. CAS-Nummer 13463-67-7),
   - Graphit (z.B. CAS-Nummer 7782-42-5),
   - Siliziumdioxid (z.B. Quarz mit der CAS-Nummer: 14808-60-7 oder glasartiges SiO₂ mit der CAS-Nummern: 60676-86-0),
   - Magnesiumoxid (z.B. CAS-Nummer: 1309-48-4),
   - Calciumoxid (z.B. CAS-Nummer 1305-78-8),
   - Calciumsilikat (z.B. CAS-Nummer: 1344-95-2),
   - Schichtsilikate, vorzugsweise Glimmer,
   - Aluminiumsilikate,
   - Magnesiumaluminiumsilikat, vorzugsweise Cordierit,
   - Siliziumcarbid,
      und
   - Bornitrid
   und/oder
der beziehungsweise zumindest einer der in Schritt (a1) als Feuerfestsubstanz der Komponente (i) eingesetzten Präkursoren für feuerfeste Feststoffe ausgewählt ist aus der Gruppe bestehend aus
   - Aluminiumhydroxid (z.B. CAS-Nummer: 1344-28-1),
   - Magensiumhydroxid (z.B. CAS-Nummer: 1309-42-8),
   - Schichtsilikate, vorzugsweise Kaolinit, Montmorillonit und Illit,
   - Tone, vorzugsweise Kaolin und Bentonit,
   - Phosphate wie Tricalciumphosphat (z.B. CAS-Nummer: 7758-87-4)
      und
   - Carbonate wie
      - Calciumcarbonat,
         und
      - Magnesiumcarbonat (z.B. CAS-Nummern: 546-93-0 (anhydrous), 13717-00-5 (monohydrat), 5145-48-2 (dihydrat), 14457-83-1 (trihydrat), 61042-72-6 (pentahydrat)).

Insbesondere bevorzugt ist ein erfindungsgemäßes Verfahren wie vorstehend beschrieben (insbesondere ein Verfahren, das vorstehend oder nachfolgend als bevorzugt bezeichnet ist), wobei die Gesamtmenge der in Schritt (a1) eingesetzten Feuerfestsubstanzen im Bereich von 1 bis 70 Gew.-%, besonders bevorzugt im Bereich von 5 bis 50 Gew.-%, ganz besonders bevorzugt im Bereich von 10 bis 30 Gew.-% liegt, bezogen auf die Gesamtmasse der in Schritt (a1) hergestellten Suspension.

Sämtliche der vorstehend genannten Spezies können auch in Mischung miteinander eingesetzt werden, z.B. Carbonate/Phosphate in Form von Knochenasche.

### Feuerfestsubstanzen:

Die vorstehend genannten feuerfesten Feststoffe können einzeln oder in Kombination eingesetzt werden. Die vorstehenden Präkursoren können einzeln oder in Kombination eingesetzt werden. Es können ausschließlich feuerfeste Feststoffe oder ausschließlich Präkursoren eingesetzt werden oder beide in Kombination miteinander.

### Schichtsilikate:

Bevorzugte Schichtsilikate für den Einsatz als feuerfeste Feststoffe sind die folgenden:
- "Pyrax^{®} RG-140" der Fa. C.H. Erblslöh
- "Mica G" der Fa. Aspanger Bergbau und Mineralwerke GmbH
- "Mica - MG 160" der Fa. Denain-Anzin Minéraux
   und
- Glimmer der Fa. Aspanger Bergbau und Mineralwerke GmbH mit dem Namen "Glimmer CMG".

Die vorstehenden bevorzugten Schichtsilikate können einzeln oder in Kombination eingesetzt werden.

### Oxide:

In manchen Fällen ist es jedoch vorteilhaft bestimmte Oxide als Feuerfestsubstanz der Komponente (i) in Schritt (a1) einzusetzen, wobei zumindest eines dieser Oxide ausgewählt ist aus der Gruppe bestehend aus:
- Aluminiumoxid (z.B. CAS-Nr. 21645-51-2),
- Zirkoniumoxid (z.B. CAS-Nummer 1314-23-4),
- Titandioxid (z.B. CAS-Nummer 13463-67-7),
- Siliziumdioxid (z.B. Quarz mit der CAS-Nummer: 14808-60-7 oder glasartiges SiO₂ mit der CAS-Nummern: 60676-86-0),
- Magnesiumoxid (z.B. CAS-Nummer: 1309-48-4),
   und
- Calciumoxid (z.B. CAS-Nummer 1305-78-8).

Die vorstehenden Oxide können einzeln oder in Kombination eingesetzt werden.

Bevorzugte Aluminiumoxide sind dabei das Aluminiumoxid "Nabalox^{®} NO315" der Fa. Nabaltec AG, das Aluminiumoxid "Alodur^{®} EK S1" der Fa. Treibacher Schleifmittel, das Aluminiumoxid "Alumina DF2" der Fa. MAL Magyar Aluminium und das Aluminiumoxid "Edelkorund weiß EK - Filterstaub" der Fa. Wester Mineralien.

Eine bevorzugte Kombination von Metalloxiden ist dabei eine Mischung aus Aluminiumoxid und Zirkonoxid wie z.B. "Alodur^{®} ZKSF" der Fa. Treibacher Schleifmittel.

Bevorzugte Siliziumoxide sind dabei das Siliziumoxid "Sillimat GS (<80µm)" der Fa. Refratech, das Siliziumoxid "Kalzinierte Reisspelzen" der Fa. Ziegler Mineralstoffe, das Siliziumoxid "Aerosil 200" der Fa.Evonik, das Siliziumoxid "SiO2 "RW-Füller Q1 plus" der Fa. RW Silicium GmbH und das Siliziumoxid "Millisil-Mehl W8" der Fa. Quarzwerke.

Ein bevorzugtes Calciumsilikat ist das Calciumsilikat "China Wollastonit TMM S.G." der Fa. Possehl Erzkontor.

### Aluminiumsilikate:

Bevorzugte Aluminiumsilikate für den Einsatz als feuerfeste Feststoffe bzw. Präkursoren sind Magnesiumaluminiumsilikate und die folgenden Aluminiumsilikate:
- "Andalusit 200mesh", "Andalusit 120mesh" oder "Kysil 58" der Fa. Europe Minerals,
- "Marlusit DIN 80" der Fa. Cofermin Rohstoffe,
- "Kyanit 100mesh/ 200mesh" der Fa. Possehl Erzkontor,
- "Kyanit 40-120mesh" der Fa. Ziegler Mineralstoffe,
- "Kaolinschamotte PrimaCal 50" der Fa. Sibelco Deutschland Westerwald,
- "Porzellanmehl" der Fa. Franz Mandt,
- "Molochit 120/200" der Fa. IMERYS UK
   und
- Mullit.

Magnesiumaluminiumsilikate und/oder die vorstehend genannten bevorzugte Aluminiumsilikate können einzeln oder in Kombination eingesetzt werden.

Bevorzugte Magnesiumaluminiumsilikate für den Einsatz als feuerfeste Feststoffe sind Cordierite, vorzugsweise "Cordierit C 65" der Fa. České Lupkové Závody S.A., "Cordierit B" der Fa. Alroko GmbH & Co KG und "Cordierit 0-1mm" bzw. "Cordierit DIN 70" der Fa. Spitzer Rohstoffhandelsgesellschaft mbH.

Diese bevorzugten Magnesiumaluminiumsilikate können einzeln oder in Kombination eingesetzt werden.

Die vorstehend genannten Verbindungen oder Mischungen können in Kombination miteinander als feuerfeste Feststoffe im Rahmen der vorliegenden Erfindung verwendet werden. Der Fachmann kann z.B. die gewünschte thermische Beständigkeit der Kompositpartikel und die davon nur in bestimmtem Maße abhängige Schüttdichte durch Art und Menge der feuerfesten Feststoffe gezielt einstellen. Gleiches gilt für die nachfolgend angegebenen bevorzugten Präkursoren für feuerfeste Feststoffe, für Kombinationen dieser bevorzugten Präkursoren und für Kombinationen von bevorzugten Präkursoren für feuerfeste Feststoffe mit bevorzugten feuerfesten Feststoffen wie oben beschrieben.

### Präkursoren:

Eine bevorzugte Mischung für den Einsatz als Präkursoren für feuerfeste Feststoffe ist Knochenasche, z.B. "CALTAN Knochenasche" der Fa. Neue Leimfabrik Tangermünde GmbH.

Besonders bevorzugte Kaoline für den Einsatz als Präkursoren für feuerfeste Feststoffe sind:
- "Chinafill 100" bzw. "Kaolin TEC" der Fa. Amberger Kaolinwerke
- "Kärlicher Blautonmehl" der Fa. Kärlicher Ton- und Schamottewerke Mannheim & Co.KG
- "Satintone W" der Fa. Solvadis Chemag GmbH
   und
- "Kaolin Burgess No.20" oder "Kaolin Burgess BSC SD" der Fa. Omya

Die vorstehenden besonders bevorzugten Kaoline können einzeln oder in Kombination eingesetzt werden.

Besonders bevorzugte Bentonite für den Einsatz als Präkursoren für feuerfeste Feststoffe sind:
- "Bentone 27" oder "Bentone EW" der Fa. Elementis Specialities,
- "Bentonit B" (Z.B. CAS-Nummer: 1302-78-9) der Fa. C.H. Erbslöh
   und
- "Bentonit Volclay" der Fa. Süd Chemie.

Die vorstehenden besonders bevorzugten Bentonite können einzeln oder in Kombination eingesetzt werden.

Der Einsatz der vorstehend genannten bevorzugten Feuerfestsubstanzen führt zu thermisch besonders beständigen (feuerfesten) Kompositpartikeln.

Es versteht sich, dass die Feuerfestsubstanzen in Schritt (a1) vorzugsweise als nichtaggregierte und nicht-agglomerierte Partikel vorliegen, wobei vorzugsweise das Verhältnis der maximalen Korngröße (wie vorstehend definiert) der Partikel der Feuerfestsubstanzen zur maximalen Korngröße der im erfindungsgemäßen Verfahren hergestellten Kompositpartikel im Bereich von 0,01 bis 0,2 liegt. Auf diese Weise können viele Partikel der Feuerfestsubstanzen in einem einzigen Kompositpartikel angeordnet werden.

In Schritt (a1) eingesetzte Feuerfestsubstanzen sind vorzugsweise Partikel, bevorzugt Partikel feuerfester Feststoffe, vorzugsweise feuerfeste Feststoffe mit einer Korngröße von weniger als 0,1 mm, bestimmt mittels Siebung gemäß DIN 66165-2 (4.1987) unter Anwendung des dort genannten Verfahrens D (Maschinensiebung mit ruhendem Einzelsieb in gasförmigem bewegtem Fluid, mit Luftstrahlsieb).

Bevorzugt ist ein erfindungsgemäßes Verfahren wie vorstehend beschrieben (insbesondere ein Verfahren, das vorstehend oder nachfolgend als bevorzugt bezeichnet ist), wobei
das Behandeln gemäß Schritt (a3) so durchgeführt wird, dass die Schüttdichte der resultierenden Kompositpartikel geringer ist als die Schüttdichte der ausgehärteten Tropfen im getrockneten Zustand (dies gelingt z.B. besonders leicht bei Verwendung von dichtereduzierenden Substanzen ausgewählt aus der Gruppe bestehend aus Blähmitteln und pyrolysierbaren Füllstoffen, wenn die Behandlung so durchgeführt wird, dass sie zum Blähen der Blähmittel bzw. zum Pyrolysieren der pyrolysierbaren Füllstoffe führt)
   und/oder
die besagten Kompositpartikel eine Schüttdichte < 700 g/L besitzen, vorzugsweise < 400 g/L, besonders bevorzugt < 300 g/L.

Im Rahmen der vorliegenden Erfindung wurde erkannt, dass bei gezielter Auswahl der in Schritt (a1) eingesetzten Bestandteile (i), (ii) und (iii) durch eine gezielte Behandlung der gehärteten Tropfen in Schritt (a3) eine in vielen Fällen erforderliche Verringerung der Schüttdichte erreichbar ist (indem Bestandteile zum Beispiel Pyrolysieren oder sich unter Freisetzung von Blähgasen umsetzen). Die Formbeständigkeit oder thermische Beständigkeit des aus dem gehärteten Tropfen entstehenden Kompositpartikels wird dabei überraschenderweise nicht nachteilig beeinflusst.

Kompositpartikel mit einer Schüttdichte < 700 g/L, vorzugsweise < 400 g/L, besonders bevorzugt < 300 g/L, vereinigen die Vorteile einer geringen Schüttdichte, einer hohen Isolationswirkung und einer adäquaten thermischen Beständigkeit; daher ist ihr Einsatz im erfindungsgemäßen Verfahren besonders bevorzugt.

In vielen Fällen ist ein erfindungsgemäßes Verfahren wie vorstehend beschrieben (insbesondere ein Verfahren, das vorstehend oder nachfolgend als bevorzugt bezeichnet ist) bevorzugt, wobei die in Schritt (a3) resultierenden und/oder die in Schritt (b) eingesetzten Kompositpartikel zumindest teilweise eine Korngröße im Bereich von 0,125 mm bis 0,5 mm besitzen, bestimmt mittels Siebung. Kompositpartikel mit einer Korngröße von weniger als 0,5 mm besitzen regelmäßig eine besonders gute Schüttfähigkeit und sind besonders gut zu einem Speiserelement verarbeitbar; ihre Herstellung in Schritt (a) des erfindungsgemäßen Verfahrens und ihr Einsatz in Schritt (b) ist bevorzugt.

Kompositpartikel mit einer Korngröße von weniger als 0,125 mm sind häufig insbesondere für Cold-Box-Verfahren (vgl. Schritt (c) des erfindungsgemäßen Verfahrens) nicht geeignet, da bei der Verwendung von kleineren Partikeln beim Eingasen von Gasen der Strömungswiderstand zu groß wird. Außerdem muss bei einer entsprechend höheren Gesamtoberfläche der Partikel mehr Bindemittel in Schritt (b) verwendet werden, was nicht vorteilhaft ist. Es besitzen daher vorzugsweise zumindest 95 Gew.-% der in Schritt (a) hergestellten Kompositpartikel, bezogen auf die Gesamtmasse der in Schritt (a) hergestellten Kompositpartikel,
und/oder
95 Gew.-% der in Schritt (b) eingesetzten Kompositpartikel, bezogen auf die Gesamtmasse der in Schritt (b) eingesetzten Kompositpartikel,
einer Korngröße von 0,125 mm oder mehr; dies gilt insbesondere, wenn in Schritt (c) des erfindungsgemäßen Verfahrens das Formen und Aushärten der Speisermasse zu einem Speiserelement nach dem Cold-Box-Verfahren erfolgt.

Häufig ist auch ein erfindungsgemäßes Verfahren wie vorstehend beschrieben (insbesondere ein Verfahren, das vorstehend oder nachfolgend als bevorzugt bezeichnet ist) bevorzugt, wobei Komponente (ii) als dichtereduzierende Substanz beziehungsweise Substanzen
ein oder mehrere Blähmittel umfasst und das Behandeln gemäß Schritt (a3) so durchgeführt wird, dass das beziehungsweise die mehreren Blähmittel blähen und dadurch Hohlräume im entstehenden Kompositpartikel ausbilden
   und/oder
ein oder mehrere pyrolysierbare Füllstoffe umfasst und das Behandeln gemäß Schritt (a3) so durchgeführt wird, dass das beziehungsweise die mehreren pyrolysierbaren Füllstoffe pyrolyiseren und dadurch Hohlräume im entstehenden Kompositpartikel ausbilden.

Das Ausbilden von Hohlräumen in Schritt (a3) ist bei Einsatz von Blähmitteln bzw. pyrolysierbaren Füllstoffen ein besonderer Teilaspekt der vorliegenden Erfindung, da so die Schüttdichte der entstandenen Kompositpartikel entscheidend verringert und die Isolierwirkung erhöht wird. Menge und Korngröße der Blähmittel bzw. der pyrolysierbaren Füllstoffe sind relevante Parameter für das Schüttgewicht und die Porosität der resultierenden Kompositpartikel.

Bevorzugt ist ein erfindungsgemäßes Verfahren wie vorstehend beschrieben (insbesondere ein Verfahren, das vorstehend oder nachfolgend als bevorzugt bezeichnet ist), wobei Komponente (i) als Feuerfestsubstanzen ein oder mehrere Präkursoren für feuerfeste Feststoffe umfasst und das Behandeln gemäß Schritt (a3) ein thermisches Behandeln umfasst, bei dem die Präkursoren in einen feuerfesten Feststoff umgewandelt werden (dies lässt sich üblicherweise mittels XRD-Messung nachweisen),
wobei vorzugsweise der oder zumindest einer der Präkursoren für feuerfeste Feststoffe ein Ton oder tonhaltiges Gestein ist und das Behandeln gemäß Schritt (a3) ein thermisches Behandeln bei einer Temperatur im Bereich von 900 bis 980 °C umfasst, so dass der Ton in einen feuerfesten Feststoff umgewandelt wird, wobei der Ton vorzugsweise Kaolinit und/oder Illit enthält (dies lässt sich üblicherweise mittels XRD-Messung nachweisen).

Ein Ton bzw. tonhaltiges Gestein zur Verwendung als Präkursor sind dabei z.B. Kaolin und Bentonit.

Es ist eine besondere Leistung der vorliegenden Anmeldung erkannt zu haben, dass bestimmte Präkursor-Materialien (Kaoline, z.B. "Chinafill 100" bzw. "Kaolin TEC" der Fa. Amberger Kaolinwerke und "Kärlicher Blautonmehl" der Fa. Kärlicher Ton- und Schamottewerke Mannheim & Co.KG) bei einer thermischen Behandlung in Schritt (a3) bereits bei vergleichsweise niedrigen Temperaturen in eine andere Phase besonderer thermischer Beständigkeit übergehen und somit zu einer noch besseren thermischen Beständigkeit der hergestellten Kompositpartikel in erfindungsgemäßen Verfahren beitragen. Bei Einsatz von Kaolin als Präkursor wird in Schritt (a3) des erfindungsgemäßen Verfahrens vorzugsweise der gehärtete Tropfen auf eine Temperatur im Bereich von 900 bis 980 °C erhitzt, so dass z.B. Kaolinit über Zwischenphasen hinweg in den feuerfesten Feststoff Mullit übergeht.

Ein Beispiel für einen Präkursor für einen feuerfesten Feststoff ist Kaolin (für ein entsprechendes XRD eines Kaolins siehe Fig. 16). In Figur 17 ist ein XRD von gemäß Schritt (a2) hergestellten gehärteten Tropfen nach ihrer Trocknung abgebildet; die Tropfen enthielten Kaolinit. Die verfestigten und getrockneten Tropfen wurden anschließend gemäß Schritt (a3) behandelt (Sinterung/Temperung bei 900°C oder 980°C) und es wurde ein XRD der resultierenden Kompositpartikeln nach einer Sinterung/Temperung bei 900°C (vgl. Fig. 18) und nach einer Sinterung/Temperung bei 980°C (vgl. Fig. 19) gemessen.

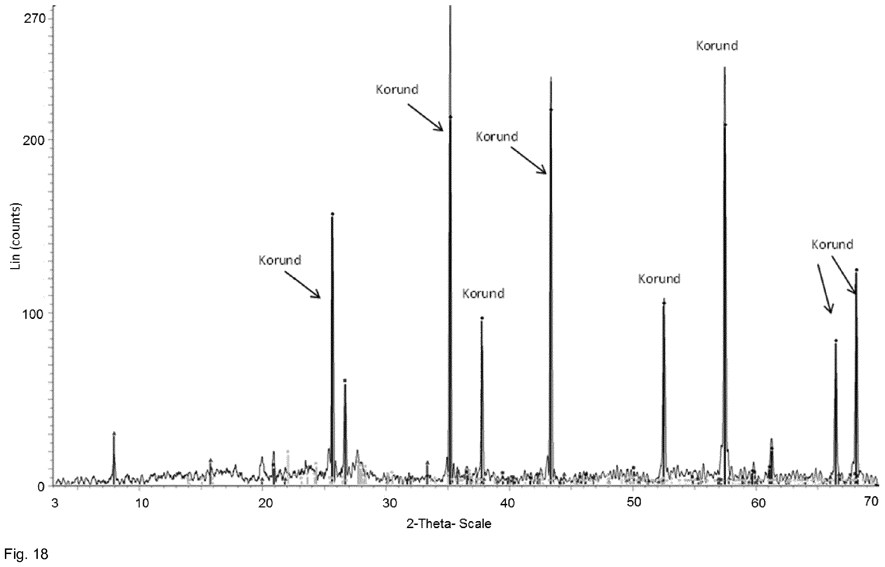

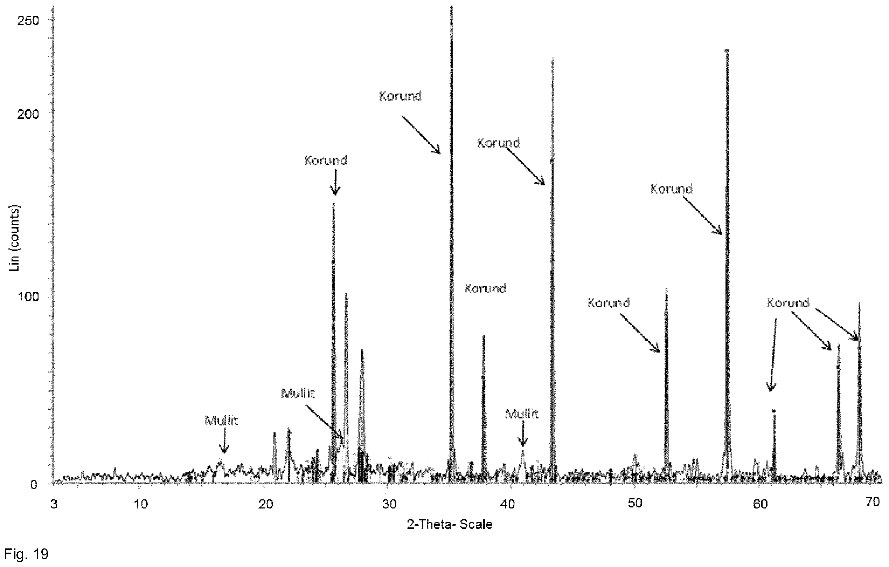

Das XRD vor der Behandlung gemäß Schritt (a3) unterscheidet sich deutlich von den XRDs der Kompositpartikeln nach der Behandlung gemäß Schritt (a3). Insbesondere die zum Kaolinit gehörigen Reflexe bei einem Winkel von rund 12°, 20° und 25° (2-Theta) sind nach einer Sinterung/Temperung bei 900°C (vgl. Fig. 18) und nach der Sinterung bei 980°C (vgl. Fig. 19) gänzlich verschwunden.

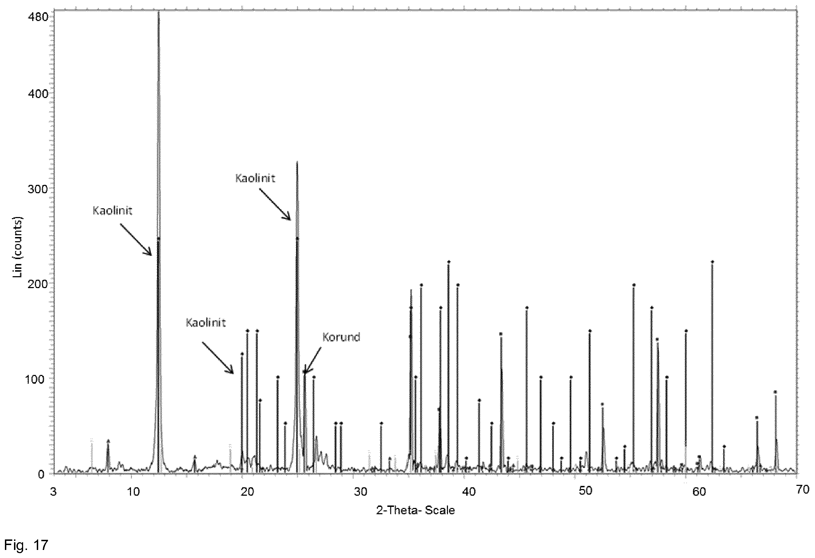

Die in Figur 19 durch das Wort "Mullit" markierten Reflexe der XRDs, die im Unterschied zu Figur 18 und Figur 17 vorliegen, stammen hauptsächlich von Mullit, welches sich aus der thermischen Umsetzung des Kaolinits gebildet hat und eine sehr hohe thermische Beständigkeit aufweist.

Die Verwendung von Präkursoren von feuerfesten Feststoffen, insbesondere die Verwendung von bevorzugten Präkursoren von feuerfesten Feststoffen wie oben beschrieben, trägt ebenso wie der unmittelbare Einsatz von feuerfesten Feststoffen zu einer erhöhten thermischen Beständigkeit der erfindungsgemäß hergestellten Kompositpartikel bei.

Besonders bevorzugt ist ein Verfahren wie vorstehend beschrieben (insbesondere ein Verfahren, das vorstehend oder nachfolgend als bevorzugt bezeichnet ist), wobei vorzugsweise beim thermischen Behandeln eine Temperatur von 1000 °C nicht überschritten wird.

Beim Aufbau von Reaktoren, welche Behandlungstemperaturen von 1000°C überschreiten, sind besondere technische Maßnahmen nötig. Daher trägt eine thermische Behandlung bei 980°C oder weniger zu einer Senkung der Reaktorkomplexität bei und hat einen deutlich geringeren Energiebedarf.

Die thermische Beständigkeit der erfindungsgemäß hergestellten Kompositpartikel ist insbesondere überraschend, wenn man sie mit der thermischen Beständigkeit des Standardmaterials Hohlkugelkorund vergleicht. Für die Herstellung von Hohlkugelkorund, wird meist eine Schmelze aus Aluminiumoxid erzeugt, die anschließend verblasen wird. Um eine Aluminiumoxidschmelze zu erzeugen, sind regelmäßig entsprechend der Schmelztemperatur von Al₂O₃ Temperaturen im Bereich von ca. 2000°C notwendig. Die Herstellung von keramischen oder glasartigen Mikrohohlkugeln erfolgt beispielsweise gemäß EP1832560 in Temperaturbereichen von 1000 - 2000°C. Erfindungsgemäß unter Verwendung geeigneter Präkursoren hergestellte Kompositpartikel besitzen auch nach einer Behandlung bei niedrigeren Temperaturen (Sinterung/Temperung, siehe oben) eine erhöhte thermische Beständigkeit.

Bevorzugt ist ein Verfahren wie vorstehend beschrieben (insbesondere ein Verfahren, das vorstehend oder nachfolgend als bevorzugt bezeichnet ist), wobei in Schritt (a3) die gehärteten Tropfen gewaschen und vorzugsweise die resultierenden gewaschenen Tropfen getrocknet werden. Im Anschluss an das Waschen (und gegebenenfalls Trocknen) werden dann weitere Behandlungsschritte durchgeführt, vorzugsweise Behandlungsschritte, wie sie vorstehend als bevorzugt bezeichnet sind.

Die in Schritt (a) hergestellten Kompositpartikel sind vorzugsweise rieselfähig; in Schritt (b) eingesetzt werden vorzugsweise in Schritt (a) hergestellte rieselfähige Kompositpartikel oder eine rieselfähige Fraktion von in Schritt (a) hergestellten Kompositpartikeln.

Bevorzugt ist ein Verfahren wie vorstehend beschrieben (insbesondere ein Verfahren, das vorstehend oder nachfolgend als bevorzugt bezeichnet ist), wobei in Schritt (a3) die gehärteten Tropfen behandelt werden, so dass als Zwischenprodukt feste Partikel resultieren, und wobei anschließend die Oberfläche dieser festen Partikel versiegelt wird, vorzugsweise mittels eines organischen Beschichtungsmittels, so dass die besagten Kompositpartikel resultieren. Im Einzelfall ist der Einsatz eines anorganischen Beschichtungsmittels vorteilhaft.

Beim Herstellen von Speiserelementen nach dem erfindungsgemäßen Verfahren und somit unter Verwendung von auf erfindungsgemäße Weise hergestellten Kompositpartikeln resultiert aufgrund der in vielen Fällen hohen Porosität der besagten Kompositpartikel häufig ein erhöhter Verbrauch an Bindemitteln, insbesondere bei Einsatz von organischen Bindemitteln ist dies unerwünscht. Dies führt einerseits zu erhöhten Kosten und zudem während des Abgusses zu erhöhten Emissionen. Um den Bindemittelverbrauch und die korrespondierenden Kosten zu reduzieren, ist es vorteilhaft, die Oberfläche der besagten Kompositpartikel zu versiegeln und so ein unzweckmäßiges Eindringen des Bindemittels in die Poren zu verhindern.

Bevorzugt ist ein Verfahren wie vorstehend beschrieben (insbesondere ein Verfahren, das vorstehend oder nachfolgend als bevorzugt bezeichnet ist), wobei in Schritt (b) als Bindemittel ein organisches Bindemittel, vorzugsweise ein Cold-Box-Bindemittel eingesetzt wird und wobei in Schritt (c) das Aushärten gemäß dem Cold-Box-Verfahren durch Begasung mit einem organischen Amin erfolgt.

Ein besonders bevorzugtes organisches Beschichtungsmittel ist Eiklar, das vorzugsweise in Form einer wässrigen Lösung appliziert wird.

Eine wässrige Eiklarlösung wird vorzugsweise hergestellt durch Mischen eines Eiweißpulvers mit Wasser. Entsprechende Eiklarlösungen werden z.B. hergestellt mit:
- Eiweißpulver Standard (Produktnummer 150061) der Firma NOVENTUM Foods,
- Eiweißpulver High Whip (Produktnummer 150062) der Firma NOVENTUM Foods
   und
- Eiweißpulver High Gel (Produktnummer 150063) der Firma NOVENTUM Foods.

Da die besagten Kompositpartikel wie oben beschrieben in manchen Fällen eine hohe Porosität aufweisen, ist es besonders vorteilhaft, diese mit einem der bevorzugten Beschichtungsmittel zu versiegeln. Die bevorzugten Beschichtungsmittel wie oben beschrieben sind ohne weiteres im Markt verfügbar, nicht giftig und einfach prozessierbar.

Eiklar ist dabei als organisches Beschichtungsmittel besonders bevorzugt, da es die Oberfläche der Kompositpartikel hervorragend versiegelt und somit deren Fähigkeit zur Aufnahme von Bindemittel in vorteilhafter Weise reduziert.

Besonders bevorzugt ist ein Verfahren wie vorstehend beschrieben (insbesondere ein Verfahren, das vorstehend oder nachfolgend als bevorzugt bezeichnet ist), wobei in Schritt (b) ein oder mehrere weitere Bestandteile eingesetzt werden, die ausgewählt sind aus der Gruppe bestehend aus Spheres aus Flugasche, Reisschalenasche, Kern-Hülle-Partikeln (vorzugsweise gemäß der Offenbarung in EP 2 139 626 B1), kalzinierte Kieselgur, Aluminium, Magnesium, Silizium, Eisenoxid, Manganoxid, Siliziumdioxid (z.B. in Form von Quarzsand), Schamotte, Mullit, Kaliumnitrat und Natriumnitrat. Insbesondere bevorzugt ist hierbei ein erfindungsgemäßes Verfahren , wobei die Gesamtmenge der in Schritt (b) eingesetzten weiteren Bestandteile der genannten Gruppe im Bereich von 1 bis 90 Gew.-%, besonders bevorzugt im Bereich von 5 bis 70 Gew.-%, insbesondere bevorzugt im Bereich von 10 bis 50 Gew.-% liegt, bezogen auf die Gesamtmasse der in Schritt (b) hergestellten Speisermasse.

Ein erfindungsgemäßes Verfahren zur Herstellung eines exothermen Speiserelements für die Gießereiindustrie umfasst vorzugsweise in Schritt (b) das Mischen der in Schritt (a) hergestellten Kompositpartikel oder einer Fraktion dieser Kompositpartikel mit einem Bindemittel sowie einem Metall ausgewählt aus der Gruppe bestehend aus Aluminium, Magnesium und Silizium und/oder einem Oxidationsmittel ausgewählt aus der Gruppe bestehend aus Eisenoxid, Kaliumnitrat und Natriumnitrat sowie optional weiteren Bestandteilen zu einer Speisermasse.

Die Erfindung betrifft auch ein Speiserelement, herstellbar gemäß einem Verfahren wie vorstehend beschrieben (insbesondere gemäß einem Verfahren, das vorstehend oder nachfolgend als bevorzugt bezeichnet ist). Ein erfindungsgemäßes Speiserelement umfasst Kompositpartikel wie oben beschrieben. Bei Herstellung eines erfindungsgemäßen Speiserelements gemäß einem bevorzugten erfindungsgemäßen Verfahren ergeben sich spezifische Besonderheiten und charakteristische Produkteigenschaften (z.B. hinsichtlich der stofflichen Zusammensetzung und der thermischen Beständigkeit, der Isolationswirkung und des geringen Speisergewichts).

Die Erfindung betrifft auch die Verwendung eines Matrixverkapselungsverfahrens, vorzugsweise unter Verwendung einer Düse, besonders bevorzugt unter Verwendung einer vibrierenden Düse, zur Herstellung von Kompositpartikeln mit einer Schüttdichte < 700 g/L, vorzugsweise < 400 g/L, besonders bevorzugt < 300 g/L, bei der Herstellung von Speiserelementen für die Gießereiindustrie.

Dieser Aspekt der Erfindung beruht auf der überraschenden Erkenntnis, dass die Verwendung derart zubereiteter Kompositpartikel mit einer Schüttdichte von < 700 g/L, vorzugsweise < 400 g/L, besonders bevorzugt < 300 g/L, sehr leichte, gut isolierende Speiserelemente mit vorzugsweise hoher thermischer Beständigkeit ergibt. Hinsichtlich bevorzugter Ausgestaltungen einer solchen Verwendung gelten die für das erfindungsgemäße Verfahren angegebenen Erläuterungen entsprechend.

Außerdem betrifft die Erfindung die Verwendung von versiegelten Kompositpartikeln, bestehend aus einem mittels eines Matrixverkapselungsverfahrens herstellbaren Kompositpartikel und einer den Kompositpartikel umgebenden und diesen versiegelnden Hülle aus einem organischen Beschichtungsmittel (z.B. Eiklar, siehe oben) als Füllstoff in einem Speiserelement, vorzugsweise in einem mittels des Cold-Box-Verfahrens hergestellten Speiserelement.

Die Verwendung entsprechender versiegelter Kompositpartikel in einem Cold-Box-Verfahren hat den Vorteil, dass man weniger Bindemittel einsetzen muss und das eingesetzte Bindemittel auch für die anschließende Begasung mit Aminen besser zugänglich ist; auf die obigen Ausführungen sei verwiesen.

Hinsichtlich bevorzugter Ausgestaltungen einer erfindungsgemäßen Verwendung gelten die für das erfindungsgemäße Verfahren angegebenen Erläuterungen entsprechend.

Die vorliegende Erfindung betrifft auch ein Verfahren zur Herstellung von feuerfesten (vorzugsweise hochfeuerfesten) Kompositpartikeln mit einer Korngröße von weniger als 2 mm, bestimmt mittels Siebung, mit den folgenden Schritten:
(a1) Herstellen von Tropfen einer Suspension aus zumindest den folgenden Startmaterialien:
   (i) ein oder mehrere Feuerfestsubstanzen ausgewählt aus der Gruppe bestehend aus
      feuerfeste Feststoffe und Präkursoren für feuerfeste Feststoffe,
   (ii) ein oder mehrere dichtereduzierende Substanzen ausgewählt aus der Gruppe bestehend aus
      Leichtfüllstoffe mit einer jeweiligen Schüttdichte im Bereich von 10 bis 350 g/L, Blähmittel und pyrolysierbare Füllstoffe,
   (iii) als kontinuierliche Phase eine verfestigbare Flüssigkeit,
(a2) Verfestigen der verfestigbaren Flüssigkeit, so dass die Tropfen zu gehärteten Tropfen härten und der beziehungsweise die Feuerfestsubstanzen sowie der beziehungsweise die dichtereduzierenden Substanzen in der sich verfestigenden kontinuierlichen Phase eingekapselt werden,
(a3) Behandeln der gehärteten Tropfen, so dass die besagten feuerfesten Kompositpartikel resultieren.

Die Erfindung betrifft entsprechend auch die Anwendung dieses erfindungsgemäßen Verfahrens in einem erfindungsgemäßen Verfahren zur Herstellung eines Speiserelements für die Gießereiindustrie; die vorstehenden Ausführungen zum erfindungsgemäßen Verfahren zur Herstellung eines Speiserelements für die Gießereiindustrie gelten entsprechend für das erfindungsgemäße Verfahren zur Herstellung von feuerfesten Kompositpartikeln.

Die Erfindung betrifft zudem auch die Verwendung von feuerfesten (vorzugsweise hochfeuerfesten) Kompositpartikeln, welche herstellbar sind oder hergestellt sind durch das erfindungsgemäße Verfahren zur Herstellung von feuerfesten Kompositpartikeln mit einer Korngröße von weniger als 2 mm, bestimmt mittels Siebung, als Bestandteil eines Speiserelements. Die vorstehenden Ausführungen zum erfindungsgemäßen Verfahren zur Herstellung eines Speiserelements für die Gießereiindustrie gelten entsprechend für die erfindungsgemäße Verwendung von feuerfesten (vorzugsweise thermisch bei 1700°C beständigen) Kompositpartikeln. Bevorzugt ist die erfindungsgemäße Verwendung von feuerfesten (vorzugsweise thermisch bei 1700°C beständigen) Kompositpartikeln mit einer Schüttdichte < 700 g/L, vorzugsweise < 400 g/L, besonders bevorzugt < 300 g/L.

Die vorliegende Erfindung wird nachfolgend unter Bezugnahme auf die Figuren und durch Beispiele näher erläutert.

### Figuren:

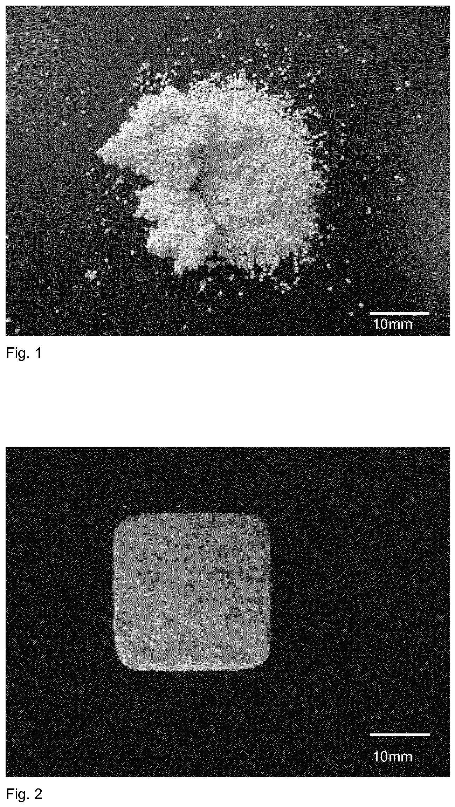

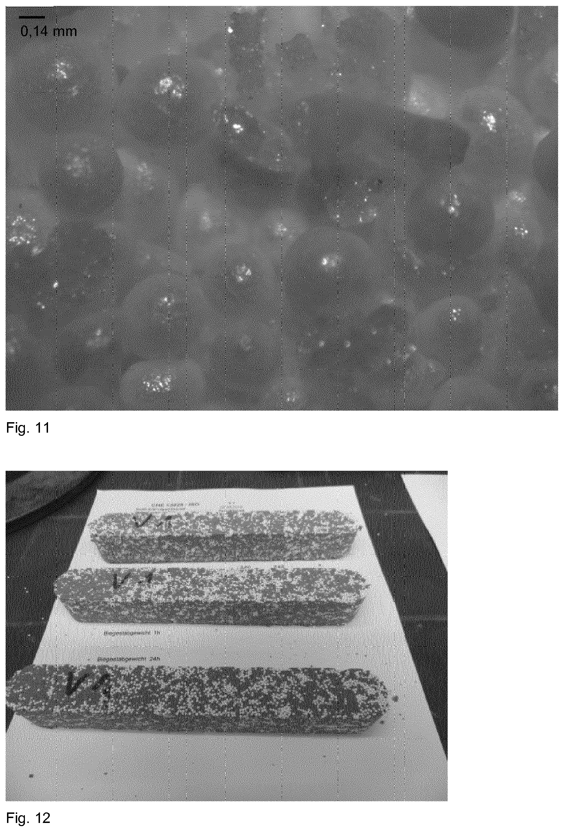

Fig. 1: In Fig. 1 ist der Rückstand im Tiegel nach dem Sintertest bei 1600°C der erfindungsgemäßen Kompositpartikel B36 dargestellt.
   Wie man in Fig. 1 erkennen kann, ist ein geringer Anteil der erfindungsgemäßen Kompositpartikel miteinander versintert, gleichzeitig liegt jedoch ein beträchtlicher Anteil immer noch in einer schüttfähigen Form vor.
Fig.2: In Fig. 2 ist der Tiegelrückstand nach dem Sintertest bei 1600°C der nicht erfindungsgemäßen Kompositpartikel W250-6 dargestellt.
   Wie man in Fig. 2 erkennt, ist der Tiegelrückstand miteinander versintert worden, sodass ein zusammenhängender "Tiegelkuchen" entstanden ist.

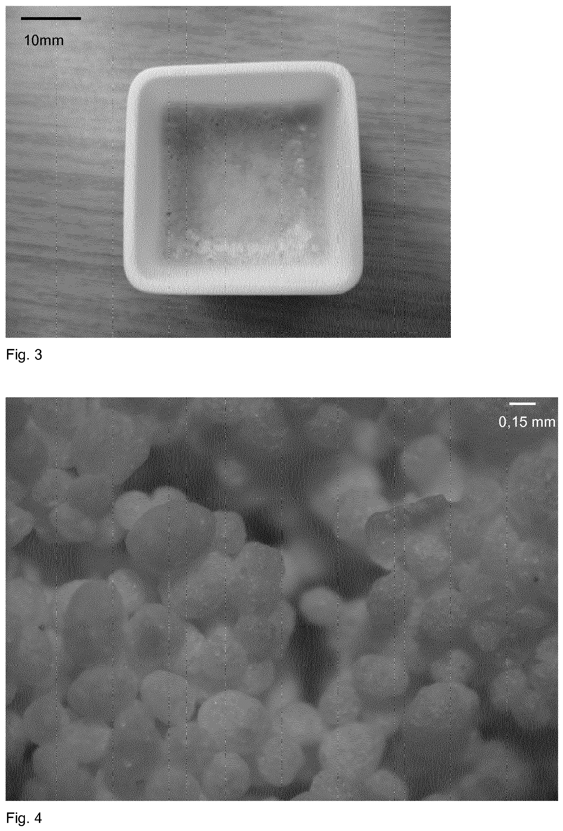

Fig. 3: In Fig. 3 ist eine Aufnahme des Tiegelinhalts nach dem Sintertest bei 1600°C der nicht erfindungsgemäßen Kompositpartikel KHP 108 dargestellt.
   Wie man klar erkennen kann, ist der Inhalt des Tiegels zu einer durchgehenden Masse verschmolzen.
Fig. 4: In Fig. 4 ist eine mikroskopische Aufnahme der erfindungsgemäßen Kompositpartikel B36 nach dem Sintertest bei 1600°C dargestellt.
   Wie man sehr gut erkennen kann, haben die erfindungsgemäßen Kompositpartikel nach dem Sintertest noch keine Sinterhälse gebildet.

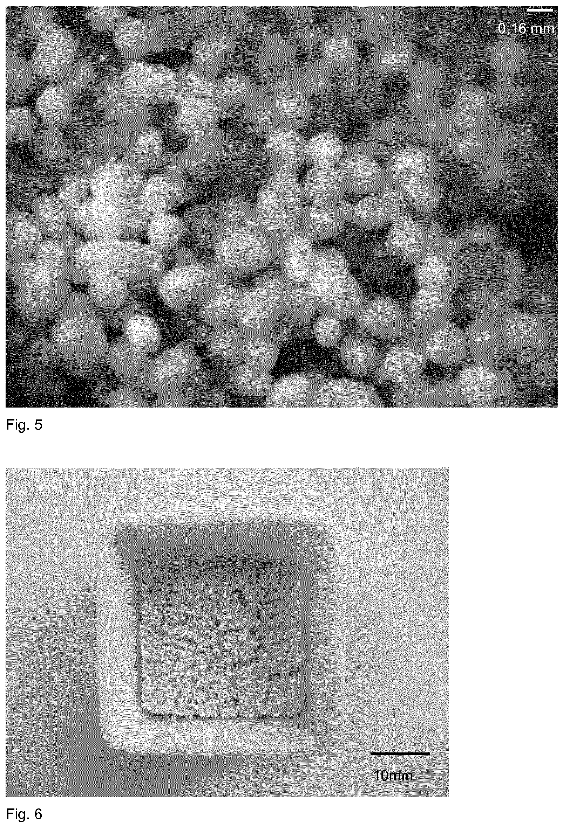

Fig. 5: In Fig. 5 ist eine mikroskopische Aufnahme der nicht erfindungsgemäßen Kompositpartikel W250-6 nach dem Sintertest bei 1600°C dargestellt.
   Man kann eindeutig erkennen, dass sich Sinterhälse zwischen den nicht erfindungsgemäßen Kompositpartikeln gebildet haben und die gesamten nicht erfindungsgemäßen Kompositpartikel sich daher zu einem zusammenhängenden "Tiegelkuchen" verbunden haben.
Fig. 6: In Fig. 6 ist der Rückstand im Tiegel nach dem Sintertest bei 1700°C der erfindungsgemäßen Kompositpartikel B36 dargestellt.
   Ein geringer Anteil der erfindungsgemäßen Kompositpartikel ist miteinander versintert. Es liegt jedoch ein beträchtlicher Anteil immer noch in einer schüttfähigen Form vor.

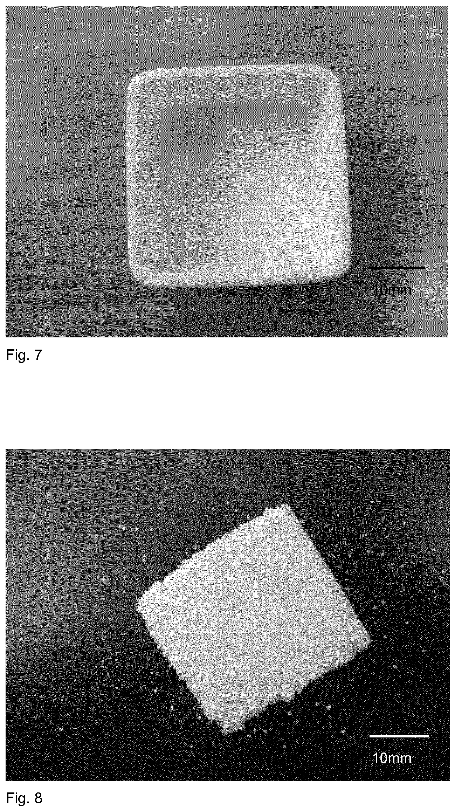

Fig. 7: In Fig. 7 ist der Tiegelrückstand nach dem Sintertest bei 1700°C der nicht erfindungsgemäßen Kompositpartikel Hohlkugelkorund "Hargreaves" dargestellt.
   Man kann erkennen, dass die gesamten nicht erfindungsgemäßen Kompositpartikel sich zu einem zusammenhängenden "Tiegelkuchen" verbunden haben.
Fig. 8: In Fig. 8 ist der Tiegelrückstand nach dem Sintertest bei 1700°C der nicht erfindungsgemäßen Kompositpartikel Hohlkugelkorund "KKW" dargestellt.
   Wie man klar erkennen kann, haben sich die gesamten nicht erfindungsgemäßen Kompositpartikel zu einem zusammenhängenden "Tiegelkuchen" verbunden.

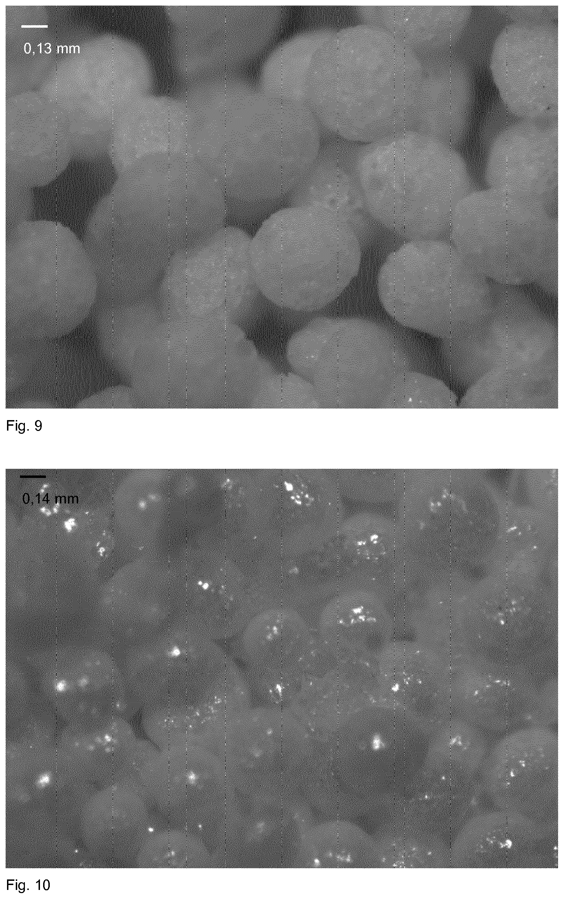

Fig. 9: In Fig. 9 ist eine rasterelektronenmikroskopische Aufnahme der erfindungsgemäßen Kompositpartikel B36 nach dem Sintertest bei 1700°C dargestellt.
   Wie man sehr gut erkennen kann, haben die erfindungsgemäßen Kompositpartikel nach dem Sintertest noch keine Sinterhälse gebildet.
Zu Fig. 10: In Fig. 10 ist eine mikroskopische Aufnahme der nicht erfindungsgemäßen Kompositpartikel Hohlkugelkorund "Hargreaves" nach dem Sintertest bei 1700°C dargestellt.
   Die Partikel sind während des Sintertest oberflächlich geschmolzen, wodurch sich sämtliche nicht erfindungsgemäßen Kompositpartikel beim Erstarren zu einem zusammenhängenden "Tiegelkuchen" verbunden haben.
Zu Fig. 11: In Fig. 11 ist eine vergrößerte mikroskopische Aufnahme der Fig. 10 der nicht erfindungsgemäßen Kompositpartikel Hohlkugelkorund "KKW" nach dem Sintertest bei 1700°C dargestellt.
   Die Partikel sind während des Sintertest oberflächlich geschmolzen, wodurch sich sämtliche nicht erfindungsgemäßen Kompositpartikel beim Erstarren zu einem zusammenhängenden "Tiegelkuchen" verbunden haben.
Fig. 12: In Fig. 12 ist ein erfindungsgemäßer Prüfriegel dargestellt, welches mit Kompositpartikeln "B36-Eiklar" hergestellt wurde, deren Oberfläche versiegelt wurde.

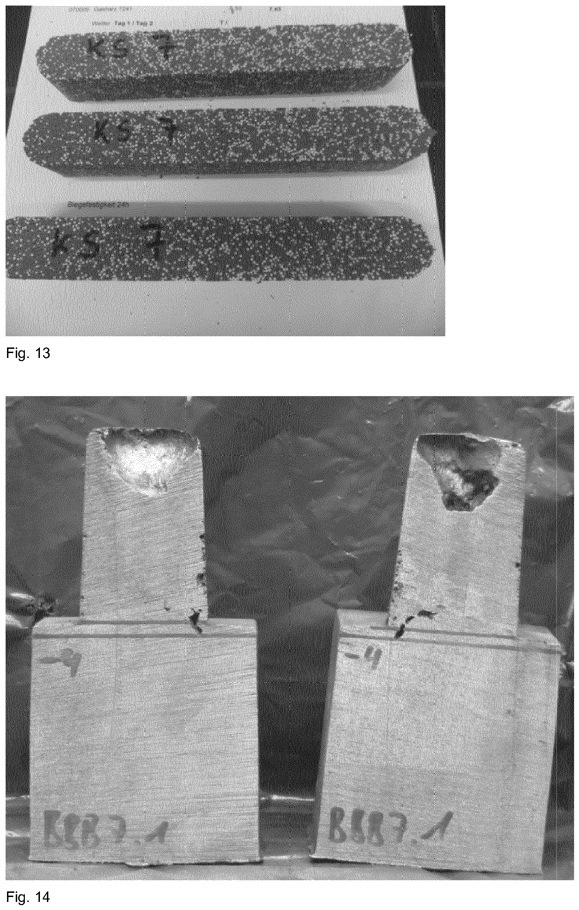

Fig. 13: In Fig. 13 sind erfindungsgemäßer Prüfriegel dargestellt, welche mithilfe der Kompositpartikel B36 (keine Oberflächenversiegelung) hergestellt wurden.
Fig. 14: In Fig. 14 sind zwei Schnitthälften eines Eisengussstücks dargestellt, das in einem sogenannten Würfelversuch mit nicht erfindungsgemäßen Speiserelementen hergestellt wurde.

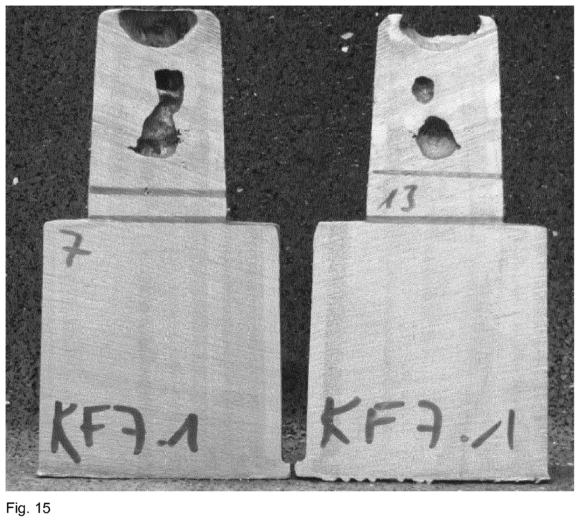

Fig. 15: In Fig. 15 sind zwei Schnitthälften eines Eisengussstücks dargestellt, das in einem sogenannten Würfelversuch mit erfindungsgemäßen Speiserelementen hergestellt wurde.

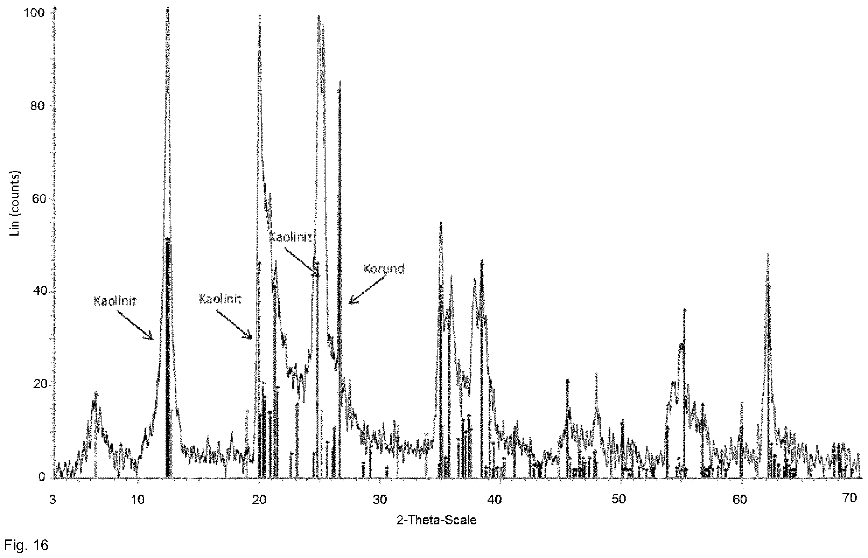

Fig. 16: In Fig. 16 ist ein XRD eines Kaolins gezeigt. Auf der Y-Achse sind die Counts der Messung (entspricht der Intensität der Reflexe) und auf der X-Achse der Winkel in der 2-THETA-Skala zu sehen.
   Die Hauptreflexe des Kaolinits sind bei einem Winkel bei rund 12° 2-Theta, 20° 2-Theta und 25° 2-Theta gut sichtbar.
Fig. 17: In Fig. 17 ist ein XRD der in Schritt (a2) hergestellten gehärteten Tropfen nach ihrer Trocknung abgebildet. Auf der Y-Achse sind die Counts der Messung (entspricht der Intensität der Reflexe) und auf der X-Achse der Winkel in der 2-THETA-Skala zu sehen.
   Auch hier sind die Hauptreflexe des Kaolinits bei einem Winkel von bei rund 12° 2-Theta, 20° 2-Theta und 25° 2-Theta gut sichtbar. Zudem wird Korund, der als feuerfester Füllstoff zugegeben wurde, nachgewiesen.
Fig. 18: In Fig. 18 ist ein XRD der erfindungsgemäß hergestellten Kompositpartikel nach einer Sinterung bei 900 °C gezeigt. Auf der Y-Achse sind die Counts der Messung (entspricht der Intensität der Reflexe) und auf der X-Achse der Winkel in der 2-THETA-Skala zu sehen.
   Es ist gut erkennbar, dass nach einer Sinterung bei 900 °C die Reflexe des Kaolinits nicht mehr sichtbar sind. Es wird als Hauptphase Korund, der als feuerfester Füllstoff zugegeben wurde, nachgewiesen.
Fig. 19: In Fig. 19 ist ein XRD der erfindungsgemäß hergestellten Kompositpartikel nach einer Sinterung bei 980 °C gezeigt. Auf der Y-Achse sind die Counts der Messung (entspricht der Intensität der Reflexe) und auf der X-Achse der Winkel in der 2-THETA-Skala zu sehen.
   Nach einer Sinterung bei 980 °C sind keine Reflexe des Kaolinits detektierbar, sondern es wird stattdessen die neugebildete Phase Mullit (Peaks bei 16,5°2-Theta; 26°2-Theta und 41°2-Theta) röntgenographisch erfasst. Zudem wird Korund, der als feuerfester Füllstoff zugegeben wurde, nachgewiesen.

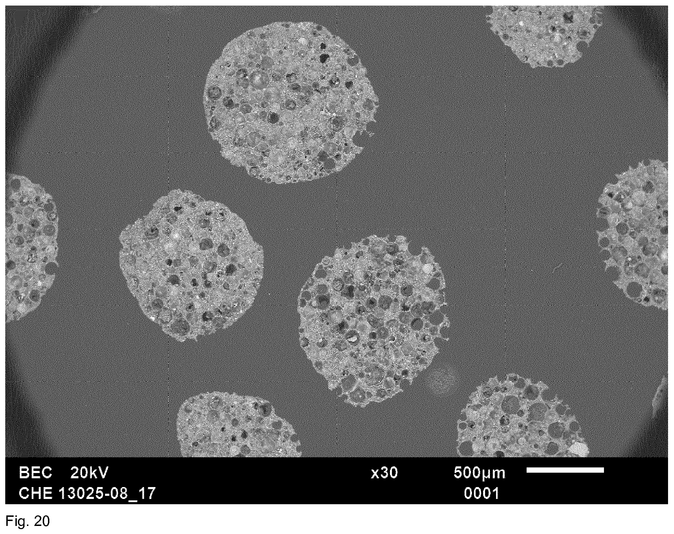

Fig. 20: In Fig. 20 ist eine rasterelektronenmikroskopische Aufnahme der erfindungsgemäß hergestellten Kompositpartikel mit der Bezeichnung "B36" (siehe Beispiele weiter unten im Text).

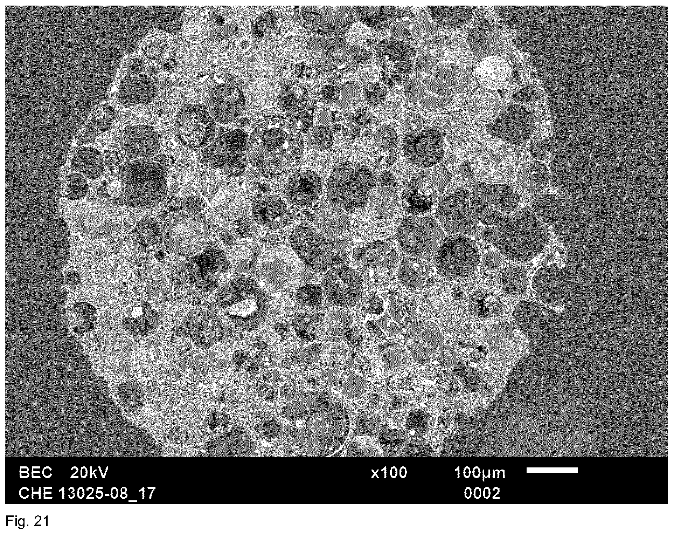

Fig. 21: In Fig. 21 ist eine vergrößerte rasterelektronenmikroskopische Aufnahme der erfindungsgemäß hergestellten Kompositpartikel mit der Bezeichnung "B36" (siehe Beispiele weiter unten im Text) gezeigt.
   Es ist sehr gut erkennbar, dass die verschiedenen feuerfesten Feststoffe einzeln von der kontinuierlichen Phase umschlossen sind und somit fester zusammengehalten werden, wodurch die erfindungsgemäß hergestellten Kompositpartikel die gewünschte Formstabilität und gewünschte thermische Stabilität erhalten.

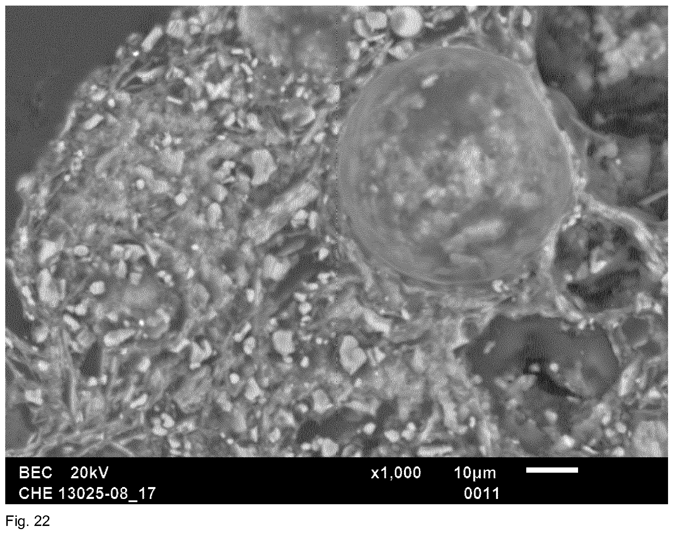

Fig. 22: Fig. 22 zeigt eine stark vergrößerte rasterelektronenmikroskopische Aufnahme der erfindungsgemäß hergestellten Kompositpartikel "B36".

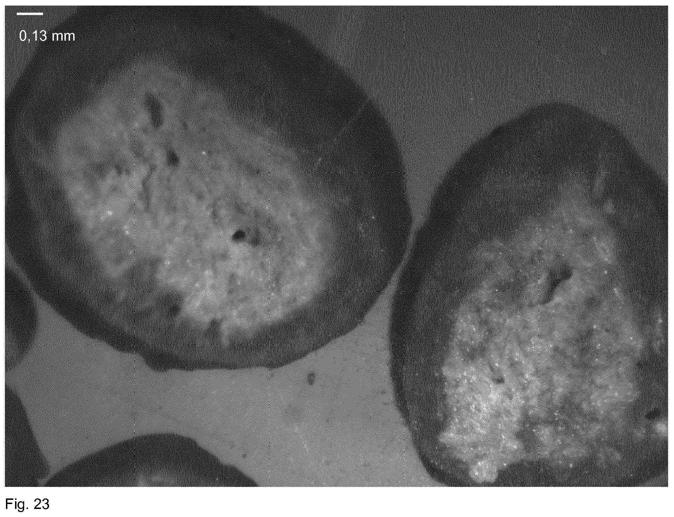

Fig. 23: Fig. 23 zeigt eine lichtmikroskopische Aufnahme der erfindungsgemäß hergestellten Kompositpartikel mit der Bezeichnung "F3" (siehe Tabelle 1 weiter unten im Text) unmittelbar vor der Behandlung im Muffelofen.
   Es ist sehr gut erkennbar, dass die Partikel unmittelbar vor der Behandlung im Muffelofen sehr kompakt sind und nur vereinzelte Hohlräume aufweisen.

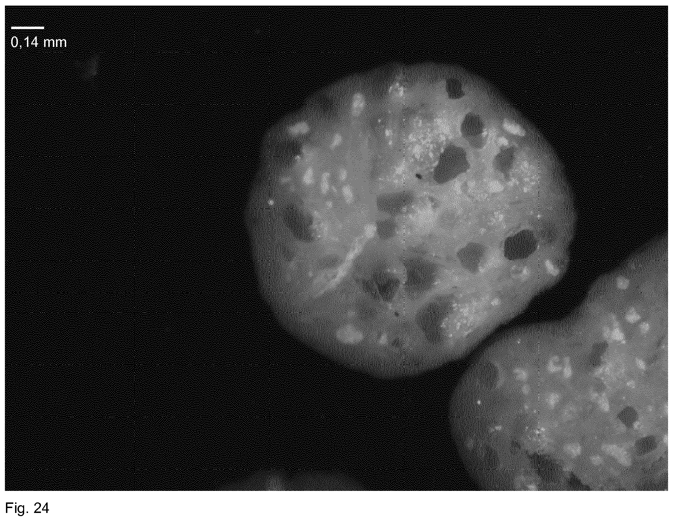

Fig. 24: Fig. 24 zeigt eine lichtmikroskopische Aufnahme der erfindungsgemäß hergestellten Kompositpartikel mit der Bezeichnung "F3" (siehe Tabelle 1 weiter unten im Text) nach der Behandlung im Muffelofen.

Es ist sehr gut erkennbar, dass die Partikel nach der Behandlung im Muffelofen eine beträchtliche Anzahl an Hohlräumen aufweisen, die durch das Blähen des eingesetzten Blähmittels während der thermischen Behandlung entstanden sind.

Im Folgenden wird die vorliegende Erfindung anhand von Beispielen näher erläutert:

### Messmethoden:

### 1. Korngrößenbestimmung:

Die Bestimmung der Korngrößen von Kompositpartikeln mittels Siebung erfolgt gemäß DIN 66165-2 (4.1987) unter Anwendung des dort genannten Verfahrens F (Maschinensiebung mit bewegtem Einzelsieb oder Siebsatz in gasförmigem ruhendem Fluid). Es wird eine Vibrationssiebmaschine des Typs RETSCH AS 200 control eingesetzt; dabei wird die Amplitude auf die Stufe 2 eingestellt; es erfolgt keine Intervallsiebung, die Siebdauer beträgt 1 Minute.

Die Bestimmung der Korngrößen von in Schritt (a) als dichtereduzierende Substanz der Komponente (ii) eingesetzten Leichtfüllstoffen erfolgt ebenfalls gemäß DIN 66165-2 (4.1987) unter Anwendung des dort genannten Verfahrens F (Maschinensiebung mit bewegtem Einzelsieb oder Siebsatz in gasförmigem ruhendem Fluid). Es wird ebenfalls eine Vibrationssiebmaschine des Typs RETSCH AS 200 control eingesetzt; dabei wird die Amplitude auf die Stufe 2 eingestellt; es erfolgt keine Intervallsiebung, die Siebdauer beträgt 1 Minute.

Die Bestimmung der Korngrößen von feuerfesten Feststoffe mit einer Korngröße von weniger als 0,1 mm erfolgt mittels Siebung gemäß DIN 66165-2 (4.1987) unter Anwendung des dort genannten Verfahrens D (Maschinensiebung mit ruhendem Einzelsieb in gasförmigem bewegtem Fluid, mit Luftstrahlsieb).

### 2. Bestimmung der Schüttdichte:

Die Schüttdichte wurde nach DIN EN ISO 60 2000-1 bestimmt.

### 3. Bestimmung der Wasseraufnahmefähigkeit:

Die Bestimmung der Wasseraufnahme wurde mit Hilfe eines Enslin-Geräts durchgeführt. Die Auswertung erfolgte nach DIN 18132.

### 4. Bestimmung der Phasenzusammensetzung:

Die Pulverdiffraktogramme wurden mit einem Pulverdiffraktometer Siemens D 5005 mit einer Kupferanode aufgenommen. Die Messungen erfolgten im Beugungswinkelbereich 3-70°2-Theta; Schrittweite 0,020°; Zählzeit 4step/sec. Die Auswertung wurde mit der Standardsoftware EVA und ICDD PC-PDF Datenbank durchgeführt.

### 5. Bestimmung der chemischen Zusammensetzung und Morphologie:

Die Morphologie der Proben wurde mit Hilfe eines REM der Firma Jeol JSM 6510 durchgeführt. Die chemische Zusammensetzung wurde mit Hilfe einer EDX-Analyse anhand eines EDX der Firma Oxford INCA durchgeführt.

Weiterhin wurde zur Bestimmung der Morphologie ein Lichtmikroskop VisiScope ZTL 350 mit Kamera Visicam 3.0 benutzt.

### 6. Methode zur Bestimmung der thermischen Beständigkeit (Sintertest):

Der Sintertest wurde in der vorliegenden Erfindung zur Bestimmung der thermischen Beständigkeit verschiedener Rohstoffe in Anlehnung an das VDG-Merkblatt P26 "Prüfung von Formgrundstoffen" durchgeführt. Eine zu untersuchende Menge von Partikeln gleicher Zusammensetzung wurde einer definierten thermischen Behandlung (zum Beispiel 1600 °C oder 1700 °C für jeweils eine halbe Stunde) in einem Ofen der Firma Carbolite HTF 1800 mit einem Temperaturreglertyp E 3216 unterzogen und anschließend über eine definierte mechanische Belastung mittels Siebung bewertet.

Zuerst wurde eine Siebung der zu untersuchenden Menge von Partikel mit einem Sieb der Maschenweite von 0,5 mm, siehe nachfolgende Tabelle 2, oder von 0,71 mm, siehe nachfolgende Tabelle 3, durchgeführt, um die Reproduzierbarkeit und Vergleichbarkeit der unterschiedlichen Versuche sicherzustellen.

Anschließend wurden die gesiebten Partikel in einem Aluminiumoxidtiegel einer definierten thermischen Behandlung mit den folgenden Schritten unterzogen:
- Vorsinterung der Proben, 30min bei 900°C im vorgeheizten Ofen, um eine identische thermische Belastung der Vergleichsproben wie die erfindungsgemäßen Kompositpartikel zu gewährleisten,
- Temperung der Proben mit definierter Ofenreise (Ofen Fa. Carbolite HTF 1800 mit Temperatur-Regler Typ E3216): von 25°C bis 200°C mit 1K/min, anschließend bis zur Endtemperatur (1600 °C während einer halben Stunde, siehe nachfolgende Tabelle 2, oder 1700 °C während einer halben Stunde, siehe nachfolgende Tabelle 3) mit 3K/min und anschließende Abkühlung bis Raumtemperatur mit 3K/min.

Im Anschluss wurden die abgekühlten Partikel mit Aluminiumoxidtiegel (siehe Fig. 3 (Partikel geschmolzen), Fig. 6 und Fig. 7) oder ohne Aluminiumoxidtiegel fotografiert (siehe Fig. 1, Fig 2 und Fig. 8) und, sofern die untersuchten Partikel während der definierten thermischen Behandlung nicht geschmolzen waren, der Aluminiumoxidtiegel, in welchem die untersuchten Partikel getempert wurden, in einen Siebturm eingespannt und durch eine definierte Siebung mit einem Kontrollsieb an einem Retsch AS 200 jeweils 1 Minute bei einer Amplitude von 2 ohne Intervallsiebung, d.h. Dauersiebung mechanisch beansprucht. Die Maschenweite des Kontrollsiebs war auf die maximal zu erwartende Korngröße der untersuchten Partikel eingestellt (entweder 0,5 mm, siehe nachfolgende Tabelle 2, oder 0,71 mm, siehe nachfolgende Tabelle 3). Dabei wird das Verhältnis von Siebrückstand zu Siebdurchgang als Bewertungskriterium herangezogen (vgl. VDG-Merkblatt P26 "Prüfung von Formgrundstoffen", Oktober 1999). Bei einem Faktor von Siebrückstand/Siebdurchgang von größer 1 gilt die Probe als versintert und daher als nicht thermisch beständig.

Probenspezifische Parameter wie zum Beispiel die Korngröße der jeweiligen Probe wurden bei der Auswertung berücksichtigt.

### Experimenteller Teil (Teil 1 bis 3):

### Experimenteller Teil 1 - gemäß Schritt (a) des erfindungsgemäßen Verfahrens Herstellen von Kompositpartikeln (B36, B37, B31) mit einer Korngröße von weniger als 2 mm (nachfolgend auch als "erfindungsgemäße Kompositpartikel" bezeichnet):

### (a1) Herstellen von Tropfen einer Suspension aus Startmaterialien:

Es wurde eine 1-%ige wässrige Natriumalginatlösung (1 Gew.-% Natriumalginat von der Fa. Alpichem mit der CAS-Nr. 9005-38-3 bezogen auf die Gesamtmasse der wässrigen Lösung) hergestellt.

Das Dispergiermittel Sokalan^{®} FTCP 5 der Firma BASF wurde mit Wasser verdünnt, um eine entsprechende Dispergierlösung herzustellen; das Massenverhältnis Sokalan^{®} FTCP 5 zu Wasser betrug 1:2.

Die hergestellte 1-%ige wässrige Natriumalginatlösung und die hergestellte Dispergierlösung wurden anschließend in einem Mischungsverhältnis gemäß der Tabelle 1 gemischt, so dass eine verfestigbare Flüssigkeit entstand (verfestigbare Flüssigkeit zur Verwendung als kontinuierliche Phase im Sinne des Bestandteils (iii) gemäß Schritt (a1)).

Unter Rühren wurden dann gemäß der nachfolgenden Tabelle 1 ausgewählte Präkursoren für feuerfeste Feststoffe und feuerfeste Feststoffe (Bestandteil (i) gemäß Schritt (a1)) zu der verfestigbaren Flüssigkeit hinzugegeben, bis eine sämige Suspension entstand.

Unter Rühren wurden im Anschluss in die sämige Suspension Borosilikatkugeln in einer Menge gemäß der nachfolgenden Tabelle 1 als Beispiel eines Leichtfüllstoffs (Bestandteil (ii) gemäß Schritt (a1)) hinzugegeben sowie darauffolgend eine Menge an Wasser gemäß Tabelle 1. Es resultierte eine verdünnte Suspension.

**Tabelle 1: Ingredienzien zur Herstellung von erfindungsgemäßen Kompositpartikeln und deren resultierende Schüttdichte.**

| Startmaterial | | Ingredienzien | | Zusammensetzung der Suspension (Gewichtsanteile) | | | | |
|---|---|---|---|---|---|---|---|---|
| | | Bestandteil | Hersteller | | | | | |
| Präkursor für feuerfeste Feststoffe [Gew.-%] | (i) | Kaolin TEC | Amberger Kaolinwerke | 11,00 | 10,0 | 11,0 | 10,0 | 15,0 |
| | (i) | Kärlicher Blauton | Kärlicher Ton- und Schamottewerke Mannheim & Co.KG | 5,00 | 5,00 | 5,00 | 5,00 | 5,00 |
| | (i) | Kaolin (Satintone ^{®}W(Whitete x)) | BASF | -- | -- | 10,85 | 10,0 | -- |
| Feuerfester Stoff [Gew.-%] | (i) | Nabalox^{®} NO315 | Nabaltec AG | 10,85 | 10,0 | -- | -- | -- |
| Leichtfüllstoff [Gew.-%] | (ii) | Borsilikatgla skugeln (Produktname:3M Glass Bubbles K1) mit einer Schüttdichte von 60g/L | 3M Deutschland GmbH | 3,15 | 5,00 | 3,15 | -- | -- |
| Leichtfüllstoff [Gew.-%] | (ii) | Geblähter Perlit (Produktname: Eurocell 140) mit einer Schüttdichte von 120g/L | RS Rohstoff-Sourcing GmbH | -- | -- | -- | -- | 8,00 |
| Blähmittel [Gew.-%] | (ii) | Holzmehl Ligno-Tech 120mesh TR mit einer Schüttdichte von 110g/L | Brandenburg Holzmühle | -- | -- | -- | 10,0 | -- |
| Blähmittel [Gew.-%] | (ii) | Kokosnussschalenmehl Coconit 300 mit einer Schüttdichte von 500g/L | Mahlwerk Neubauer-Friedrich Geffers GmbH | -- | -- | -- | -- | 5,00 |
| Blähmittel [Gew.-%] | (ii) | Zucker mit einer Schüttdichte von 850g/L | Südzucker AG | -- | -- | -- | -- | 5,00 |
| 1%ige Natriumal ginatlösun g [Gew.-%] | --- | Natriumalgin at; CAS: 9005-38-3 | Applichem | 65,0 | 65,0 | 65,00 | 60,0 | 57,0 |
| Dispergier lösung [Gew.-%] | --- | Sokalan^{®} FT CP5 in Wasser (1.2) | BASF | 5,00 | 5,00 | 5,00 | 5,00 | 5,00 |
| Wasser [Gew.-%] | | | | 20,0 | 20,0 | 25,0 | 45,0 | 25,0 |
| | | | | | | | | |
| **Resultierende erfindungsgemäße Kompositpartikel** | | | | B36 | B37 | B31 | F3 | E6 |
| **Schüttdichte unmittelbar vor Behandlungim Muffelofen [g/L]** | | | | 350 | 260 | 320 | 390 | 300 |
| **Schüttdichte nach Behandlung im Muffelofen (erfindungsgemäße Kompositpartikel) [g/L]** | | | | 340 | 250 | 305 | 300 | 250 |

### (a2) Verfestigen der verfestigbaren Flüssigkeit

Die verdünnte Suspension wurde in Spritzen aus Kunststoff eingefüllt und in eine Spritzpumpe LA-30 eingespannt. Der Vorschub betrug 12 bis 15 ml/min. Die verdünnte Suspension in den Spritzen wurde dann durch eine Vibrationsdüse gedrückt, sodass die verdünnte Suspension in gleichmäßigen Tropfen aus der Vibrationsdüse heraustropfte. Die aus der Vibrationsdüse tropfenden Tropfen fielen in eine 2%-ige wässrige Calciumchloridlösung (CaCl₂, Produktname "Calcium Chloride 2-hydrate powder for analysis ACS" der Fa. Applichem, CAS-Nr. 10035-04-8, 2 Gew.-% bezogen auf die Gesamtmasse der Calciumchloridlösung) und verfestigten sich, so dass sie zu gehärteten Tropfen härteten und dabei die Feuerfestsubstanzen sowie die Borosilikatglaskugeln in der sich verfestigenden Mischung (bestehend aus der 1-%igen Natriumalginatlösung und der Dispergierlösung) eingekapselt wurden.

Anmerkung: Die Größe der gehärteten Tropfen war abhängig von Zusammensetzung der verdünnten Suspension, der Fördermenge der Pumpe und der Vibrationsfrequenz der Düse.

### (a3) Behandeln der gehärteten Tropfen

Anschließend wurden die gehärteten Tropfen abgeschöpft und in Wasser gewaschen.

Im Anschluss wurden die gewaschenen und gehärteten Tropfen in einem Trockenschrank bei 180 °C für 40 min getrocknet. Nach der Trocknung lagen rieselfähige gehärtete Tropfen vor, deren Schüttdichte "unmittelbar vor Behandlung im Muffelofen" in Tabelle 1 angegeben ist.

Im Anschluss wurden die rieselfähigen gehärteten Tropfen in einem vorgeheizten Muffeloffen für 30 Minuten bei 900 °C erhitzt. Nach der Abkühlung resultierten erfindungsgemäße Kompositpartikel.

Wie der letzten Zeile der Tabelle 1 zu entnehmen ist, sind die gemessenen Schüttdichten der hergestellten erfindungsgemäßen Kompositpartikel unter 350 g/L. Durch eine geeignete Wahl der Feuerfeststoffe oder der Präkursoren für Feuerfeststoffe und der Leichtfüllstoffe kann die Schüttdichte resultierender erfindungsgemäßer Kompositpartikel sogar bis auf 250 g/L reduziert werden (vgl. Kompositpartikel B37 und E6 in Tabelle 1).

### Sintertest bei 1600 °C zum Vergleich der thermischen Beständigkeit von erfindungsgemäßen und nicht erfindungsgemäßen Kompositpartikeln

Gemäß dem weiter oben beschriebenen Sintertest wurden erfindungsgemäße Kompositpartikel im Vergleich zu nicht erfindungsgemäßen Kompositpartikeln "KHP 108" (Kern-Hülle-Partikel der Fa. Chemex) und nicht erfindungsgemäßen Partikeln "W 205-6" (Produkt "Weiße Spheres W250-6" der Fa. Omega Minerals) geprüft. Die erfindungsgemäßen und nicht erfindungsgemäßen Partikel wiesen eine Korngröße im Bereich von 0,25 bis 0,5 mm auf. Die Sintertemperatur betrug 1600 °C. Das Kontrollsieb zur Ermittlung des Siebrückstands und des Siebdurchgangs hatte eine Maschenweite von 0,5 mm.

Die Ergebnisse des Sintertests sind in Tabelle 2 dargestellt.

**Tabelle 2: Ergebnisse des Sintertests bei 1600 °C (Vorsinterung der Proben, 30min bei 900°C im vorgeheizten Ofen, dann Sintertemperatur von 1600°C für 30 min)**

| | **erfindungsgemäße Kompositpartikel** | **nicht erfindungsgemäße Kompositpartikel** | **nicht erfindungsgemäße Kompositpartikel** |
|---|---|---|---|
| Bezeichnung der getesteten Partikel | "B36" | "W250-6" | "KHP 108" |
| Korngröße[mm] | 0,25-0,5 | 0,25-0,5 | 0,25-0,5 |
| Schüttdichte [g/L] | 340 | 390 | 540 |
| Ergebnis der Siebung mit 0,5mm- Kontrollsieb | Siebrückstand/Siebdurchgang = 0,4 | Siebrückstand/Siebdurchgang = 28,4 | vollständig aufgeschmolzen, keine Siebung möglich |
| Makroskopische Aufnahme nach Sinterung | siehe Fig. 1 | siehe Fig. 2 | siehe Fig. 3 |
| Mikroskopische Aufnahme nach Sinterung | siehe Fig. 4 | siehe Fig. 5 | --- |
| Ergebnis | nicht versintert | versintert | geschmolzen |

Wie aus Tabelle 2 zu entnehmen ist, ist das Verhältnis von Siebrückstand zu Siebdurchgang bei den erfindungsgemäßen Kompositpartikel "B36" nach dem Sintern unter 1, während dieses Verhältnis bei den nicht erfindungsgemäßen Kompositpartikel nach dem Sintern über 1 ist. Damit ist die thermische Beständigkeit der erfindungsgemäßen Kompositpartikel "B36" bei 1600 °C besser als die der nicht erfindungsgemäßen Kompositpartikel.

### Sintertest bei 1700 °C von erfindungsgemäßen Kompositpartikeln und nicht erfindungsgemäßen Kompositpartikeln

Gemäß dem weiter oben beschriebenen Sintertest wurden erfindungsgemäße Kompositpartikel "B36" im Vergleich zu nicht erfindungsgemäßen Kompositpartikeln "Hargreaves" (Hohlkugelkorund mit >98,8% Al₂O₃ der Fa. "Hargreaves raw material services GmbH") und nicht erfindungsgemäßen Kompositpartikeln "KKW" (Hohlkugelkorund mit >98,8% Al₂O₃ der Firma "Imerys Fused Minerals Zschornewitz GmbH") geprüft. Die Korngrößen der Kompositpartikel lagen dabei immer im vorgegebenen Bereich von 0,18 bis 0,71 mm. Die Sintertemperatur betrug 1700 °C. Das Kontrollsieb zur Bestimmung des Siebrückstandes und des Siebdurchgangs hatte eine Maschenweite von 0,71 mm.

Die Ergebnisse des Tests sind in Tabelle 3 dargestellt:

**Tabelle 3: Ergebnisse des Sintertests bei 1700 °C (Vorsinterung der Proben, 30min bei 900°C im vorgeheizten Ofen, dann Sintertemperatur von 1700°C für 30 min)**

| | **erfindungsgemäße Kompositpartikel** | **nicht erfindungsgemäße Kompositpartikel** | **nicht erfindungsgemäße Kompositpartikel** |
|---|---|---|---|
| Bezeichnung der getesteten Partikel | "B36" | "Hargreaves" | "KKW" |
| Korngröße[mm] | 0,18-0,71 | 0,18-0,71 | 0,18-0,71 |
| Schüttdichte [g/L] | 340 | 980 | 770 |
| Ergebnis der Siebung mit 0,71mm-Kontrollsieb | Siebrückstand/Siebdurchgang = 0,7 | Siebrückstand/Siebdurchga ng > 1 * | Siebrückstand/Siebdurchga ng > 1 * |
| Makroskopische Aufnahme nach Sinterung | siehe Fig. 6 | siehe Fig. 7 | siehe Fig. 8 |
| Mikroskopische Aufnahme nach Sinterung | siehe Fig. 9 | siehe Fig. 10 | siehe Fig. 11 |
| Ergebnis | nicht versintert | versintert | versintert |

| | | | |
|---|---|---|---|
| * kein Aufbrechen des Sinterkuchens durch Siebung möglich | | | |

Wie aus Tabelle 3 zu entnehmen ist, ist das Verhältnis von Siebrückstand zu Siebdurchgang bei den erfindungsgemäßen Kompositpartikel "B36" nach dem Sintern unter 1, während dieses Verhältnis bei den nicht erfindungsgemäßen Kompositpartikel nach dem Sintern über 1 ist. Damit ist die thermische Beständigkeit der erfindungsgemäßen Kompositpartikel "B36" bei 1700 °C besser als die der nicht erfindungsgemäßen Kompositpartikel.

### Experimenteller Teil 2 - "Oberflächenversiegelung"

Die erfindungsgemäßen Kompositpartikel B36 (vgl. Tabelle 1) wurden, nachdem sie bei 900 °C für 30 Minuten in einem vorgeheizten Ofen getempert wurden, wie folgt oberflächenversiegelt.

Die Oberflächenversiegelung erfolgte mit einer wässrigen Eiklar-Lösung, welche 6 Gew.-% Eiweißpulver High Gel (Produktnummer 150063) der Firma NOVENTUM Foods enthielt, bezogen auf das Gesamtgewicht der entstandenen wässrigen Lösung.

Anschließend wurden die erfindungsgemäßen Kompositpartikel B36 mit der hergestellten Eiklarlösung in einem Gewichtsverhältnis von Kompositpartikeln zu Eiklarlösung von 2:1 vermischt und in der entstandenen Mischung gerührt, bis die Eiklarlösung komplett absorbiert war. Anschließend wurden die mit der Eiklarlösung behandelten Kompositpartikel in einem Trockenschrank bei 110 °C für 40 Minuten getrocknet. Die resultierenden Kompositpartikel werden als B36-Eiklar bezeichnet.

Die Erfassung der Wasseraufnahmefähigkeit von erfindungsgemäßen Kompositpartikeln B36 (ohne Eiklarumhüllung) und B36-Eiklar (mit Eiklarumhüllung) mit einem Enslin-Gerät zeigte, dass die Wasseraufnahme der erfindungsgemäßen Kompositpartikel durch eine Eiklarumhüllung von 1,6 ml/g (B36) auf 0,1 ml/g (B36-Eiklar) reduziert wird.

Unter Verwendung der in Tabelle 4 angegebenen Bestandteile wurden dann nach dem Cold-Box-Verfahren (Katalysator N,N-Dimethylpropylamin) Prüfriegel hergestellt und deren Biegefestigkeit in Anlehnung an VDG Norm P 73, Verfahren A (verwendeter Mischer des Typs BOSCH Profi 67, Verarbeitung bei Raumtemperatur und Raumfeuchte, Herstellung durch Rammen, Erfassung Prüfwerte nach 1h und nach 24h, jeweils Dreifachbestimmung) mit dem Festigkeitsprüfapparat Typ PFG mit Niederdruckmanometer N (mit Motorantrieb) bestimmt.

**Tabelle 4: Einsatz erfindungsgemäßer Kompositpartikel mit und ohne Eiklar-Umhüllung (d.h. Oberflächenversiegelung). Die Angaben zu den Gewichtsprozenten der einzelnen Bestandteile sind auf die Gesamtmasse der jeweiligen Zusammensetzung der Speisermassen (mit Kompositpartikeln "B36-Eiklar" bzw. mit Kompositpartikeln "B36") bezogen.**

| **Bestandteile** | **Zusammensetzung der Speisermasse mit oberflächenversiegelten Kompositpartikeln "B36-Eiklar"** | **Zusammensetzung der Speisermasse mit nicht oberflächenversiegelte Kompositpartikel "B36"** |
|---|---|---|
| KHP 108 0,25-0,5mm (Chemex-Rohstoff) [Gew.-%] | 17,1 | 17,1 |
| KHP 69 0,1-0,3mm (Chemex-Rohstoff) [Gew.-%] | 42,74 | 42,74 |
| Erfindungsgemäße Kompositpartikel B36 [Gew.-%] | --- | 25,64 |
| Erfindungsgemäße Kompositpartikel B36 - Eiklar [Gew.-%] | 25,64 | --- |
| PolyisocyanatKomponente (Aktivator 6324, Hüttenes-Albertus) [Gew.-%] | 7,26 | 7,26 |
| Benzyletherharz-Komponente (Gasharz 7241, Hüttenes-Albertus)[Gew.-%] | 7,26 | 7,26 |
| **Resultierendes erfindungsgemäßes Speiserelement** | "V 1" (vgl. Fig. 12) | "KS 7" (vgl. Fig. 13) |
| **Biegefestigkeiten 24h eines Prüfriegels aus Speisermasse (VDG Norm P 73) [N/mm²] (Mittelwert aus drei Messwerten)** | 170 | 70 |

Tabelle 4 zeigt, dass bei Einsatz von Eiklar als Mittel zur Versiegelung der Oberfläche von auf erfindungsgemäße Weise hergestellten Kompositpartikeln Prüfriegel mit erhöhter Biegefestigkeit erhalten werden. Entsprechende Speiserelemente sind somit ebenfalls besonders mechanisch stabil.

Es wird angenommen, dass die Kompositpartikel B36 (ohne Eiklar) eine vergleichsweise große Menge an Bindemittel absorbieren, welche dann nicht mehr zum Ausbilden einer biegefesten Bindung der Prüfriegel zur Verfügung steht; dies gilt analog für entsprechende Speiserelemente.

### Experimenteller Teil 3 - Herstellung eines Speiserelements (nachfolgend: erfindungsgemäßes Speiserelement) auf erfindungsgemäße Weise

Hergestellt wurden ein erfindungsgemäßes Speiserelement und ein nicht erfindungsgemäßes Speiserelement, um sie hinsichtlich ihrer Isoliereigenschaften, der thermischen Beständigkeit und ihrer praktischen Anwendbarkeit zu vergleichen, nämlich:
- erfindungsgemäßes Speiserelement "KS 6II" mit erfindungsgemäßen Kompositpartikeln "B36 - Eiklar" mit versiegelter Oberfläche (siehe oben).
   und
- nicht erfindungsgemäßes Speiserelement "STANDARD" mit nicht erfindungsgemäßen Partikeln KHP 108 (siehe oben) anstelle der erfindungsgemäßen Kompositpartikel "B36 - Eiklar".

(a) Herstellen bzw. Bereitstellen von erfindungsgemäßen Kompositpartikeln bzw. nicht erfindungsgemäßen Kern-Hülle-Partikeln:
Die Kompositpartikel "B36 - Eiklar" mit versiegelter Oberfläche wurden wie oben beschrieben hergestellt; die Kompositpartikeln KHP 108 wurden bereitgestellt.
(b) Mischen der hergestellten erfindungsgemäßen Kompositpartikel mit versiegelter Oberfläche bzw. der nicht erfindungsgemäßen Kern-Hülle-Partikel mit einem Cold-Box-Bindemittel zu einer Speisermasse
Die genauen Zusammensetzungen der Speisermassen für das nicht erfindungsgemäße Speiserelement "STANDARD" und das erfindungsgemäße Speiserelement "KS 6ll" sind in der nachfolgenden Tabelle 5 dargestellt. Sie wurden jeweils zu einer homogenen Speisermasse vermischt.
(c) Formen und Aushärten der Speisermasse zu einem Speiserelement.
Die Speisermassen für das nicht erfindungsgemäße Speiserelement "STANDARD" bzw. das erfindungsgemäße Speiserelement "KS 6II" wurden anschließend jeweils in einer Kernschießmaschine geformt und gemäß dem Cold-Box-Verfahren begast (Katalysator N,N-Dimethylpropylamin). Es resultierten das nicht erfindungsgemäße Speiserelement "STANDARD" und das erfindungsgemäße Speiserelement "KS 6II".

**Tabelle 5: Bestandteile der für den Abguss (Würfelversuch) verwendeten Speiser. Die Angaben zu den Gewichtsprozenten der einzelnen Bestandteile sind auf die Gesamtmasse der jeweiligen Zusammensetzung der Speisermassen (für das Speiserelement "STANDARD" bzw. das Speiserelement "KS 6II") bezogen.**

| **Bestandteile** | **Zusammensetzung der Speisermasse für das Speiserelement "STANDARD" (nicht erfindungsgemäß)** | **Zusammensetzung der Speisermasse für das Speiserelement "KS 6II" (erfindungsgemäß)** |
|---|---|---|
| KHP 69 [Gew.-%] | 59,83 | 59,83 |
| nicht erfindungsgemäße und nicht oberflächenversiegelten Kompositpartikel KHP 108 [Gew.-%] | 25,65 | --- |
| erfindungsgemäße Kompositpartikel "B36 - Eiklar" [Gew.-%] | --- | 25,65 |
| PolyisocyanatKomponente (Aktivator 6324, Hüttenes-Albertus) [Gew.-%] | 7,26 | 7,26 |
| Benzyletherharz-Komponente (Gasharz 7241, Hüttenes-Albertus)[Gew.-%] | 7,26 | 7,26 |

(d) Gießen eines Würfels aus Eisen mithilfe eines erfindungsgemäßen Speisers "KS 6II" und eines nicht erfindungsgemäßen Speisers "STANDARD"
Der erfindungsgemäße Speiser "KS 6II" und der nicht erfindungsgemäße Speiser "STANDARD" (wie oben beschrieben) wurden mit sogenannten Würfelversuchen auf ihre anwendungstechnische Brauchbarkeit geprüft. In diesen Versuchen wird insbesondere überprüft, welches Speiserelement beim Gießen eines Gussteils in Form eines Würfels das bessere Speisungsvermögen aufweist.
Die gemäß den Zusammensetzungen aus Tabelle 5 hergestellten Speiser wurden jeweils auf das Modul 1,2 cm bei 1400 °C mit Eisen (GGG40) im Würfelversuch abgegossen.

Die so hergestellten würfelförmigen Gussteile aus Eisen mit Restspeiser aus Eisen sind im halbierten Zustand (durch Sägen) in den Fig. 14 (Ergebnis bei Einsatz eines nicht erfindungsgemäßen Speisers) und in Fig. 15 (Ergebnis bei Einsatz eines erfindungsgemäßen Speisers) gezeigt.

Fig. 14 zeigt Seitenlunker, die sich bis zu einer Tiefe von 4mm in den gegossenen Würfel hineinziehen (vgl. Beschriftung "-4" in Fig. 14; Abstand zwischen oberer gezeichneter Linie und unterer gezeichneter Linie = 4mm, obere Linie markiert Grenze zwischen Gussstück und metallischem Restspeiser, untere Linie markiert tiefsten Eindringpunkt des Seitenlunkers).

Fig. 15 zeigt lediglich Lunker, im metallischen Restspeiser, keine Lunker ziehen bis in den gegossenen Würfel hinein (vgl. Beschriftung "7" bzw. "13" in Fig. 15; Abstand zwischen oberer gezeichneter Linie und unterer gezeichneter Linie = 7 bzw. 13 mm, untere Linie markiert Grenze zwischen Gussstück und metallischem Restspeiser, obere Linie markiert tiefsten Punkt des Lunkers im metallischen Restspeiser; unterschiedliche Werte "7 mm" bzw. "13 mm" resultieren aus der Breite des Sägeblatts).

Aus den Fig. 14 und 15 ist ersichtlich, dass das erfindungsgemäße Speiserelement "KS 6II" ein verbessertes Speisungsvermögen im Vergleich zu dem nicht erfindungsgemäßen Speiserelement "STANDARD" besitzt.

## Patentansprüche

1. Verfahren zur Herstellung eines Speiserelements für die Gießereiindustrie, mit folgenden Schritten:
(a) Herstellen von Kompositpartikeln mit einer Korngröße von weniger als 2 mm, bestimmt mittels Siebung, in einem Matrixverkapselungsverfahren mit den folgenden Schritten:
(a1) Herstellen von Tropfen einer Suspension aus zumindest den folgenden Startmaterialien:
(i) ein oder mehrere Feuerfestsubstanzen ausgewählt aus der Gruppe bestehend aus
gemäß DIN 51060 als feuerfest zu bezeichnende feuerfeste Feststoffe und Präkursoren für gemäß DIN 51060 als feuerfest zu bezeichnende feuerfeste Feststoffe,
(ii) ein oder mehrere dichtereduzierende Substanzen ausgewählt aus der Gruppe bestehend aus
Leichtfüllstoffe mit einer jeweiligen Schüttdichte im Bereich von 10 bis 350 g/L, Blähmittel und pyrolysierbare Füllstoffe,
(iii) als kontinuierliche Phase eine verfestigbare Flüssigkeit,
(a2) Verfestigen der verfestigbaren Flüssigkeit, so dass die Tropfen zu gehärteten Tropfen härten und der beziehungsweise die Feuerfestsubstanzen sowie der beziehungsweise die dichtereduzierenden Substanzen in der sich verfestigenden kontinuierlichen Phase eingekapselt werden,
(a3) Behandeln der gehärteten Tropfen, so dass die besagten Kompositpartikel resultieren, wobei das Behandeln so durchgeführt wird, dass die Schüttdichte der resultierenden Kompositpartikel geringer ist als die Schüttdichte der ausgehärteten Tropfen im getrockneten Zustand
(b) Mischen der in Schritt (a) hergestellten Kompositpartikel oder einer Fraktion dieser Kompositpartikel mit einem Bindemittel sowie optional weiteren Bestandteilen zu einer Speisermasse,
(c) Formen und Aushärten der Speisermasse zu einem Speiserelement.

2. Verfahren nach Anspruch 1, wobei
in Schritt (a1) das Herstellen von Tropfen mittels einer oder mehrerer Düsen, vorzugsweise Vibrationsdüsen, erfolgt
und/oder
in Schritt (a2) das Verfestigen der verfestigbaren Flüssigkeit durch Abkühlen, Trocknen oder chemische Reaktion induziert wird.

3. Verfahren nach einem der vorangehenden Ansprüche, wobei die in Schritt (a1) eingesetzte verfestigbare Flüssigkeit eine durch chemische Reaktion verfestigbare Flüssigkeit ist und in Schritt (a2) das Verfestigen der verfestigbaren Flüssigkeit durch chemische Reaktion induziert wird
und/oder
wobei die verfestigbare Flüssigkeit eine durch Kationenaustauschreaktion verfestigbare Flüssigkeit ist, vorzugsweise eine durch Reaktion mit Calciumionen und/oder Bariumionen und/oder Mangan-Ionen, bevorzugt durch Reaktion mit Calciumionen, verfestigbare Flüssigkeit ist
und/oder
wobei die verfestigbare Flüssigkeit eine durch Reaktion mit Calciumionen verfestigbare Flüssigkeit ist,
die ein oder mehrere Bindemittel umfasst ausgewählt aus der Gruppe bestehend aus Alginat, PVA, Chitosan und Sulfoxyethylcellulose,
und/oder
eine wässrige Lösung ist,
wobei die verfestigbare Flüssigkeit vorzugsweise eine wässrige Alginatlösung ist.

4. Verfahren nach einem der vorangehenden Ansprüche, wobei
der beziehungsweise zumindest einer der in Schritt (a) als dichtereduzierende Substanz der Komponente (ii) eingesetzten Leichtfüllstoffe, bevorzugt mit einer Korngröße kleiner als 0,8 mm, besonders bevorzugt kleiner als 0,5 mm, ganz besonders bevorzugt kleiner als 0,3 mm, bestimmt mittels Siebung, ausgewählt ist aus der Gruppe bestehend aus:
anorganischen Hohlkugeln, organischen Hohlkugeln, Partikeln aus porösem und/oder geschäumtem Material, Reisschalenasche, Kern-Hülle-Partikeln und kalziniertem Kieselgur
und/oder
wobei das beziehungsweise zumindest eines der in Schritt (a) als Komponente (ii) eingesetzten Blähmittel ausgewählt ist aus der Gruppe bestehend aus:
- Carbonate, Hydrogencarbonate und Oxalate
- Kokosnussschalenmehl,
- Walnussschalenmehl,
- Traubenkernmehl,
- Olivenkernmehl,
- Stärke,
- Weizenmehl,
- Maismehl,
- Kartoffeldextrin,
- Zucker,
- Pflanzensamen,
- Holzmehl,
und
- Reisschalenasche,
und/oder
wobei das beziehungsweise zumindest einer der in Schritt (a) als Komponente (ii) eingesetzten pyrolysierbaren Füllstoffe ausgewählt ist aus der Gruppe bestehend aus:
- Kunststoffperlen
und
- Styroporkugeln.

5. Verfahren nach einem der vorangehenden Ansprüche, wobei
der beziehungsweise zumindest einer der in Schritt (a1) als Feuerfestsubstanz der Komponente (i) eingesetzten feuerfesten Feststoffe ausgewählt ist aus der Gruppe bestehend aus:
- Oxide, Nitride und Carbide, jeweils umfassend ein oder mehrere Elemente aus der Gruppe bestehend aus Si, Al, Zr, Ti, Mg und Ca,
- Mischoxide. Mischcarbide und Mischnitride, jeweils umfassend ein oder mehrere Elemente aus der Gruppe bestehend aus Si, Al, Zr, Ti, Mg und Ca,
und
- Graphit,
wobei vorzugsweise der beziehungsweise zumindest einer der in Schritt (a1) als Feuerfestsubstanz der Komponente (i) eingesetzten feuerfesten Feststoffe ausgewählt ist aus der Gruppe bestehend aus:
- Aluminiumoxid,
- Zirkoniumoxid,
- Titandioxid,
- Graphit,
- Siliziumdioxid,
- Magnesiumoxid,
- Calciumoxid,
- Calciumsilikat,
- Schichtsilikate, vorzugsweise Glimmer,
- Aluminiumsilikate,
- Magnesiumaluminiumsilikat, vorzugsweise Cordierit,
- Siliziumcarbid,
und
- Bornitrid
und/oder
der beziehungsweise zumindest einer der in Schritt (a1) als Feuerfestsubstanz der Komponente (i) eingesetzten Präkursoren für feuerfeste Feststoffe ausgewählt ist aus der Gruppe bestehend aus
- Aluminiumhydroxid,
- Magensiumhydroxid,
- Schichtsilikate, vorzugsweise Kaolinit, Montmorillonit und Illit,
- Tone, vorzugsweise Kaolin und Bentonit,
- Phosphate
und
- Carbonate.

6. Verfahren nach einem der vorangehenden Ansprüche, wobei
die besagten Kompositpartikel eine Schüttdichte < 700 g/L besitzen, vorzugsweise < 400 g/L, besonders bevorzugt < 300 g/L
und/oder
wobei die in Schritt (a3) resultierenden und/oder die in Schritt (b) eingesetzten Kompositpartikel zumindest teilweise eine Korngröße im Bereich von 0,125 mm bis 0,5 mm besitzen, bestimmt mittels Siebung.

7. Verfahren nach einem der vorangehenden Ansprüche, wobei Komponente (ii) als dichtereduzierende Substanz beziehungsweise Substanzen
ein oder mehrere Blähmittel umfasst und das Behandeln gemäß Schritt (a3) so durchgeführt wird, dass das beziehungsweise die mehreren Blähmittel blähen und dadurch Hohlräume im entstehenden Kompositpartikel ausbilden
und/oder
ein oder mehrere pyrolysierbare Füllstoffe umfasst und das Behandeln gemäß Schritt (a3) so durchgeführt wird, dass das beziehungsweise die mehreren pyrolysierbaren Füllstoffe pyrolyiseren und dadurch Hohlräume im entstehenden Kompositpartikel ausbilden.

8. Verfahren nach einem der vorangehenden Ansprüche, wobei Komponente (i) als Feuerfestsubstanzen ein oder mehrere Präkursoren fürfeuerfeste Feststoffe umfasst und das Behandeln gemäß Schritt (a3) ein thermisches Behandeln umfasst, bei dem die Präkursoren in einen feuerfesten Feststoff umgewandelt werden,
wobei vorzugsweise der oder zumindest einer der Präkursoren für feuerfeste Feststoffe ein Ton ist und das Behandeln gemäß Schritt (a3) ein thermisches Behandeln bei einer Temperatur im Bereich von 900 bis 980 °C umfasst, so dass der Ton in einen feuerfesten Feststoff umgewandelt wird, wobei der Ton vorzugsweise Kaolinit und/oder Illit enthält
und/oder
wobei vorzugsweise beim thermischen Behandeln eine Temperatur von 1000 °C nicht überschritten wird.

9. Verfahren nach einem der vorangehenden Ansprüche, vorzugsweise nach Anspruch 8, wobei in Schritt (a3) die gehärteten Tropfen behandelt werden, so dass als Zwischenprodukt feste Partikel resultieren, und wobei anschließend die Oberfläche dieser festen Partikel versiegelt wird, vorzugsweise mittels eines organischen Beschichtungsmittels, so dass die besagten Kompositpartikel resultieren.

10. Verfahren nach einem der vorangehenden Ansprüche, vorzugsweise nach Anspruch 9, wobei in Schritt (b) als Bindemittel ein organisches Bindemittel, vorzugsweise ein Cold-Box-Bindemittel, eingesetzt wird und wobei in Schritt (c) das Aushärten gemäß dem Cold-Box-Verfahren durch Begasung mit einem organischen Amin erfolgt.

11. Verfahren nach einem der vorangehenden Ansprüche, wobei in Schritt (b) ein oder mehrere weitere Bestandteile eingesetzt werden, die ausgewählt sind aus der Gruppe bestehend aus Spheres aus Flugasche, Reisschalenasche, Kern-Hülle-Partikeln, kalzinierte Kieselgur, Aluminium, Magnesium, Silizium, Eisenoxid, Manganoxid, Siliziumdioxid, Schamotte, Mullit, Kaliumnitrat und Natriumnitrat.

12. Speiserelement, herstellbar gemäß einem Verfahren nach einem der vorangehenden Ansprüche.

13. Verwendung eines Matrixverkapselungsverfahrens, vorzugsweise unter Verwendung einer Düse, besonders bevorzugt unter Verwendung einer vibrierenden Düse, zur Herstellung von Kompositpartikeln mit einer Schüttdichte < 700 g/L, vorzugsweise < 400 g/L, besonders bevorzugt < 300 g/L, bei der Herstellung von Speiserelementen nach Anspruch 12 für die Gießereiindustrie.

14. Verwendung von versiegelten Kompositpartikeln bestehend aus einem mittels eines Matrixverkapselungsverfahrens herstellbaren Kompositpartikel und einer den Kompositpartikel umgebenden und diesen versiegelnden Hülle aus einem organischen Beschichtungsmittel als Füllstoff in einem Speiserelement nach Anspruch 12, vorzugsweise in einem mittels des Cold-Box-Verfahrens hergestellten Speiserelement.

15. Verfahren zur Herstellung von feuerfesten Kompositpartikeln mit einer Korngröße von weniger als 2 mm, bestimmt mittels Siebung, mit den folgenden Schritten:
(a1) Herstellen von Tropfen einer Suspension aus zumindest den folgenden Startmaterialien:
(i) ein oder mehrere Feuerfestsubstanzen ausgewählt aus der Gruppe bestehend aus
gemäß DIN 51060 als feuerfest zu bezeichnende feuerfeste Feststoffe und Präkursoren für gemäß DIN 51060 als feuerfest zu bezeichnende feuerfeste Feststoffe,
(ii) ein oder mehrere dichtereduzierende Substanzen ausgewählt aus der Gruppe bestehend aus
Leichtfüllstoffe mit einer jeweiligen Schüttdichte im Bereich von 10 bis 350 g/L, Blähmittel und pyrolysierbare Füllstoffe,
(iii) als kontinuierliche Phase eine verfestigbare Flüssigkeit,
(a2) Verfestigen der verfestigbaren Flüssigkeit, so dass die Tropfen zu gehärteten Tropfen härten und der beziehungsweise die Feuerfestsubstanzen sowie der beziehungsweise die dichtereduzierenden Substanzen in der sich verfestigenden kontinuierlichen Phase eingekapselt werden,
(a3) Behandeln der gehärteten Tropfen, so dass die besagten feuerfesten Kompositpartikel resultieren, wobei das Behandeln so durchgeführt wird, dass die Schüttdichte der resultierenden Kompositpartikel geringer ist als die Schüttdichte der ausgehärteten Tropfen im getrockneten Zustand.

16. Verwendung von feuerfesten Kompositpartikeln, herstellbar durch das Verfahren nach Anspruch 15, als Bestandteil eines Speiserelements.

## Claims

1. Method for producing a feeder element for the foundry industry, comprising the following steps:
(a) producing composite particles having a particle size of less than 2 mm, determined by sieving, in a matrix encapsulation process with the following steps:
(a1) producing droplets of a suspension from at least the following starting materials:
(i) one or more refractory substances selected from the group consisting of
refractory solids to be designated refractory according to DIN 51060 and precursors of refractory solids to be designated refractory according to DIN 51060,
(ii) one or more density-reducing substances selected from the group consisting of lightweight fillers having a respective bulk density in the range from 10 to 350 g/L, expandants and pyrolysable fillers,
(iii) as continuous phase, a solidifiable liquid,
(a2) solidifying the solidifiable liquid, so that the droplets harden to hardened droplets and the refractory substance or substances and also the density-reducing substance or substances are encapsulated in the solidifying continuous phase,
(a3) treating the hardened droplets, so that the said composite particles result, wherein the treating is carried out such that the bulk density of the resultant composite particles is lower than the bulk density of the hardened droplets in the dried state,
(b) mixing the composite particles produced in step (a) or a fraction of these composite particles with a binder and also, optionally, further constituents to give a feeder composition,
(c) shaping and curing the feeder composition to give a feeder element.

2. Method according to Claim 1, wherein
in step (a1) droplets are produced by means of one or more nozzles, preferably vibrational nozzles,
and/or
in step (a2) the solidifying of the solidifiable liquid is induced by cooling, drying or chemical reaction.

3. Method according to either of the preceding claims, wherein the solidifiable liquid used in step (a1) is a liquid which is solidifiable by chemical reaction and in step (a2) the solidifying of the solidifiable liquid is induced by chemical reaction
and/or
wherein the solidifiable liquid is a liquid solidifiable by cation exchange reaction, preferably a liquid solidifiable by reaction with calcium ions and/or barium ions and/or manganese ions, more preferably by reaction with calcium ions
and/or
wherein the solidifiable liquid is a liquid solidifiable by reaction with calcium ions,
which comprises one or more binders selected from the group consisting of alginate, PVA, chitosan and sulphoxyethylcellulose,
and/or
is an aqueous solution,
in which case the solidifiable liquid is preferably an aqueous alginate solution.

4. Method according to any of the preceding claims, wherein
the lightweight filler or at least one of the lightweight fillers used in step (a) as density-reducing substance of component (ii), preferably having a particle size of less than 0.8 mm, more preferably less than 0.5 mm, very preferably less than 0.3 mm, determined by sieving, is selected from the group consisting of:
inorganic hollow beads, organic hollow beads, particles of porous and/or foamed material, rice husk ash, core-shell particles and calcined kieselguhr
and/or
wherein the expandant or at least one of the expandants used in step (a) as component (ii) is selected from the group consisting of:
- carbonates, hydrogencarbonates and oxalates,
- coconut shell flour,
- walnut shell flour,
- grape kernel flour,
- olive stone flour,
- starch,
- wheat flour,
- maize flour,
- potato dextrin,
- sugars,
- plant seeds,
- wood flour,
and
- rice husk ash,
and/or
wherein the pyrolysable filler or at least one of the pyrolysable fillers used in step (a) as component (ii) is selected from the group consisting of:
- plastics beads
and
- Styropor beads.

5. Method according to any of the preceding claims, wherein
the refractory solid or at least one of the refractory solids used in step (a1) as refractory substance of component (i) is selected from the group consisting of:
- oxides, nitrides and carbides, each comprising one or more elements from the group consisting of Si, Al, Zr, Ti, Mg and Ca,
- mixed oxides, mixed carbides and mixed nitrides, each comprising one or more elements from the group consisting of Si, Al, Zr, Ti, Mg and Ca,
and
- graphite,
wherein preferably the refractory solid or at least one of the refractory solids used in step (a1) as refractory substance of component (i) is selected from the group consisting of:
- aluminium oxide,
- zirconium oxide,
- titanium dioxide,
- graphite,
- silicon dioxide,
- magnesium oxide,
- calcium oxide,
- calcium silicate,
- phyllosilicates, preferably mica,
- aluminium silicates,
- magnesium aluminium silicate, preferably cordierite,
- silicon carbide,
and
- boron nitride
and/or
the precursor or at least one of the precursors of refractory solids used in step (a1) as refractory substance of component (i) is selected from the group consisting of
- aluminium hydroxide,
- magnesium hydroxide,
- phyllosilicates, preferably kaolinite, montmorillonite and illite,
- clays, preferably kaolin and bentonite,
- phosphates
and
- carbonates.

6. Method according to any of the preceding claims, wherein
the said composite particles possess a bulk density < 700 g/L, preferably < 400 g/L, more preferably < 300 g/L
and/or
wherein the composite particles resulting in step (a3) and/or the composite particles used in step (b) at least partly possess a particle size in the range from 0.125 mm to 0.5 mm, determined by sieving.

7. Method according to any of the preceding claims, wherein component (ii) comprises, as density-reducing substance or substances,
one or more expandants and the treating as per step (a3) is carried out such that the expandant or the two or more expandants expand and so form cavities in the resultant composite particle
and/or
comprises one or more pyrolysable fillers and the treating as per step (a3) is carried out such that the pyrolysable filler or the two or more pyrolysable fillers pyrolyse and so form cavities in the resultant composite particle.

8. Method according to any of the preceding claims, wherein component (i) comprises, as refractory substances, one or more precursors of refractory solids and the treating as per step (a3) comprises a thermal treatment in which the precursors are converted into a refractory solid,
wherein preferably the precursor or at least one of the precursors of refractory solids is a clay and the treating as per step (a3) comprises a thermal treatment at a temperature in the range from 900 to 980°C, so that the clay is converted into a refractory solid, in which case the clay preferably comprises kaolinite and/or illite,
and/or
wherein preferably a temperature of 1000°C is not exceeded during the thermal treatment.

9. Method according to any of the preceding claims, preferably according to Claim 8, wherein in step (a3) the hardened droplets are treated so that, as an intermediate, solid particles result, and wherein subsequently the surface of these solid particles is sealed, preferably by means of an organic coating material, so that the said composite particles result.

10. Method according to any of the preceding claims, preferably according to Claim 9, wherein in step (b) an organic binder is used as binder, preferably a cold-box binder, and wherein in step (c) the curing takes place by the cold-box method by gassing with an organic amine.

11. Method according to any of the preceding claims, wherein in step (b) one or more further constituents are used which are selected from the group consisting of spheres of fly ash, rice husk ash, core-shell particles, calcined kieselguhr, aluminium, magnesium, silicon, iron oxide, manganese oxide, silicon dioxide, chamotte, mullite, potassium nitrate and sodium nitrate.

12. Feeder element producible by a method according to any of the preceding claims.

13. Use of a matrix encapsulation process, preferably using a nozzle, more preferably using a vibrating nozzle, for producing composite particles having a bulk density < 700 g/L, preferably < 400 g/L, more preferably < 300 g/L, in the production of feeder elements according to Claim 12 for the foundry industry.

14. Use of sealed composite particles consisting of a composite particle, which can be produced by means of a matrix encapsulation process, and of a shell, which surrounds and seals the composite particle and consists of an organic coating material, as filler in a feeder element according to Claim 12, preferably in a feeder element produced by means of the cold-box process.

15. Method for producing refractory composite particles having a particle size of less than 2 mm, determined by sieving, comprising the following steps:
(a1) producing droplets of a suspension from at least the following starting materials:
(i) one or more refractory substances selected from the group consisting of
refractory solids to be designated refractory according to DIN 51060 and precursors of refractory solids to be designated refractory according to DIN 51060,
(ii) one or more density-reducing substances selected from the group consisting of
lightweight fillers having a respective bulk density in the range from 10 to 350 g/L, expandants and pyrolysable fillers,
(iii) as continuous phase, a solidifiable liquid,
(a2) solidifying the solidifiable liquid, so that the droplets harden to hardened droplets and the refractory substance or substances and also the density-reducing substance or substances are encapsulated in the solidifying continuous phase,
(a3) treating the hardened droplets, so that the said refractory composite particles result, wherein the treating is carried out such that the bulk density of the resultant composite particles is lower than the bulk density of the hardened droplets in the dried state.

16. Use of refractory composite particles producible by the method according to Claim 15 as constituent of a feeder element.

## Revendications

1. Procédé de fabrication d'un élément d'alimentation pour l'industrie de la fonderie, avec les étapes suivantes :
(a) la fabrication de particules composites avec une taille de particule de moins de 2 mm, déterminée par tamisage, dans un procédé d'encapsulation de matrice avec les étapes suivantes :
(a1) la fabrication de gouttes d'une suspension à partir d'au moins les matériaux de départ suivants :
(i) une ou plusieurs substances réfractaires sélectionnées à partir du groupe se composant de
substances solides réfractaires à désigner selon DIN 51060 par réfractaires et précurseurs pour des substances solides réfractaires à désigner selon DIN 51060 par réfractaires,
(ii) une ou plusieurs substances réduisant la densité sélectionnées à partir du groupe se composant de
charges légères avec une masse volumique apparente respective dans la plage de 10 à 350 g/L, agents de soufflage et charges pyrolisables,
(iii) comme phase continue un liquide solidifiable,
(a2) la solidification du liquide solidifiable de sorte que les gouttes durcissent en gouttes durcies et la ou les substances réfractaires ainsi que la ou les substances réduisant la densité soient encapsulées dans la phase continue se solidifiant,
(a3) le traitement des gouttes durcies de sorte qu'il résulte lesdites particules composites, dans lequel le traitement est réalisé de sorte que la masse volumique apparente des particules composites résultantes soit inférieure à la masse volumique apparente des gouttes durcies dans l'état séché,
(b) le mélange des particules composites fabriquées à l'étape (a) ou d'une fraction de ces particules composites avec un liant ainsi que d'autres constituants en option en une masse d'alimentation,
(c) la formation et le durcissement de la masse d'alimentation en un élément d'alimentation.

2. Procédé selon la revendication 1, dans lequel
dans l'étape (a1), la fabrication de gouttes est effectuée au moyen d'une ou plusieurs buses, de préférence buses à vibration,
et/ou
dans l'étape (a2), la solidification du liquide solidifiable est induite par refroidissement, séchage ou réaction chimique.

3. Procédé selon l'une quelconque des revendications précédentes, dans lequel le liquide solidifiable utilisé à l'étape (a1) est un liquide solidifiable par réaction chimique et dans l'étape (a2) la solidification du liquide solidifiable est induite par réaction chimique,
et/ou
dans lequel le liquide solidifiable est un liquide solidifiable par réaction d'échange de cation, de préférence est un liquide solidifiable par réaction avec des ions de calcium et/ou ions de baryum et/ou ions de manganèse, de préférence par réaction avec des ions de calcium,
et/ou
dans lequel le liquide solidifiable est un liquide solidifiable par réaction avec des ions de calcium,
qui comporte un ou plusieurs liants sélectionnés à partir du groupe se composant d'alginate, PVA, chitosane et cellulose sulfoéthylée,
et/ou
est une solution aqueuse,
dans lequel le liquide solidifiable est de préférence une solution d'alginate aqueuse.

4. Procédé selon l'une quelconque des revendications précédentes, dans lequel
la ou au moins une des charges légères utilisées à l'étape (a) comme substance réduisant la densité du composant (ii), de préférence avec une taille de particule inférieure à 0,8 mm, de manière particulièrement préféré inférieure à 0,5 mm, de manière totalement particulièrement préférée inférieure à 0,3 mm, déterminée par tamisage, est sélectionnée à partir du groupe se composant de :
sphères creuses anorganiques, sphères creuses organiques, particules de matériau poreux et/ou expansé, cendre de coque de riz, particules noyau-coquille et diatomite calcinée
et/ou
dans lequel le ou au moins un des agents de soufflage utilisés à l'étape (a) comme composant (ii) est sélectionné à partir du groupe se composant de :
- carbonate, carbonate d'hydrogène et oxalate
- farine de coque de noix de coco,
- farine de coquille de noix,
- farine de pépin de raison,
- farine de noyau d'olive,
- amidon
- farine de blé,
- farine de maïs,
- dextrine de pomme de terre,
- sucre,
- graines de plante,
- sciure,
et
- cendre de coque de riz,
et/ou
dans lequel la ou au moins une des charges pyrolisables utilisées à l'étape (a) comme composant (ii) est sélectionnée à partir du groupe se composant de :
- perles de matière plastique
et
- sphères de polystyrène.

5. Procédé selon l'une quelconque des revendications précédentes, dans lequel
la ou au moins une des substances solides réfractaires utilisées à l'étape (a1) comme substance réfractaire du composant (i) est sélectionnée à partir du groupe se composant de :
- oxydes, nitrures et carbures, respectivement comprenant un ou plusieurs éléments à partir du groupe se composant de Si, Al, Zr, Ti, Mg et Ca,
- oxydes mixtes, carbures mixtes et nitrures mixtes, respectivement comprenant un ou plusieurs éléments à partir du groupe se composant de Si, Al, Zr, Ti, Mg et Ca, et
- graphite,
dans lequel de préférence la ou au moins une des substances solides réfractaires utilisées à l'étape (a1) comme substance réfractaire du composant (i) est sélectionnée à partir du groupe se composant de :
- oxyde d'aluminium,
- oxyde de zirconium
- dioxyde de titane,
- graphite,
- dioxyde de silicium,
- oxyde de magnésium,
- oxyde de calcium,
- silicate de calcium,
- silicates lamellaires, de préférence du mica,
- silicates d'aluminium,
- silicates d'aluminium de magnésium, de préférence cordiérite,
- carbure de silicium
et
- nitrure de bore
et/ou
le ou au moins un des précurseurs utilisés à l'étape (a1) comme substance réfractaire du composant (i) pour des substances réfractaires est sélectionné à partir du groupe se composant de :
- hydroxyde d'aluminium,
- hydroxyde de magnésium,
- silicates lamellaires, de préférence kaolinite, montmorillonite et illite,
- argile, de préférence kaolin et bentonite,
- phosphate
et
- carbonate.

6. Procédé selon l'une quelconque des revendications précédentes, dans lequel
lesdites particules composites possèdent une masse volumique apparente < 700 g/L, de préférence < 400 g/L, de manière particulièrement préférée < 300 g/L,
et/ou
dans lequel les particules composites résultantes à l'étape (a3) et/ou utilisées à l'étape (b) possèdent au moins partiellement une taille de particule dans la plage de 0,125 mm à 0,5 mm, déterminée par tamisage.

7. Procédé selon l'une quelconque des revendications précédentes, dans lequel le composant (ii) comporte comme substance ou substances réduisant la densité
un ou plusieurs agents de soufflage et le traitement selon l'étape (a3) est réalisé de sorte que le ou les plusieurs agents de soufflage soufflent et réalisent ainsi des espaces creux dans la particule composite apparue,
et/ou
comporte une ou plusieurs charges pyrolisables et le traitement selon l'étape (a3) est réalisé de sorte que la ou les plusieurs charges pyrolisables pyrolisent et réalisent ainsi des espaces creux dans la particule composite apparue.

8. Procédé selon l'une quelconque des revendications précédentes, dans lequel le composant (i) comporte comme substances réfractaires un ou plusieurs précurseurs pour des substances solides réfractaires et le traitement selon l'étape (a3) comporte un traitement thermique, pour lequel les précurseurs sont convertis en une substance solide réfractaire,
dans lequel de préférence le ou au moins un des précurseurs pour des substances solides réfractaires est une argile et le traitement selon l'étape (a3) comporte un traitement thermique à une température dans la plage de 900 à 980 °C de sorte que l'argile soit convertie en une substance solide réfractaire, dans lequel l'argile contient de préférence de la kaolinite et/ou de l'illite,
et/ou
dans lequel de préférence, lors du traitement thermique, une température de 1000 °C n'est pas dépassée.

9. Procédé selon l'une quelconque des revendications précédentes, de préférence selon la revendication 8, dans lequel, dans l'étape (a3), les gouttes durcies sont traitées de sorte qu'il résulte, comme produit intermédiaire, des particules solides, et dans lequel ensuite la surface de ces particules solides soit scellée, de préférence à l'aide d'un moyen de revêtement organique de sorte qu'il résulte lesdites particules composites.

10. Procédé selon l'une quelconque des revendications précédentes, de préférence selon la revendication 9, dans lequel, dans l'étape (b), un liant organique, de préférence un liant Cold-Box, est utilisé comme liant et dans lequel, dans l'étape (c), le durcissement selon le procédé Cold-Box est effectué par fumigation avec une amine organique.

11. Procédé selon l'une quelconque des revendications précédentes, dans lequel, dans l'étape (b), un ou plusieurs autres constituants sont utilisés, lesquels sont sélectionnés à partir du groupe se composants de sphères de cendres volantes, cendre de coque de riz, particules noyau-coquille, diatomite calcinée, aluminium, magnésium, silicium, oxyde de fer, oxyde de manganèse, dioxyde de silicium, chamotte, mullite, nitrate de potassium et nitrate de sodium.

12. Elément d'alimentation pouvant être fabriqué selon un procédé selon l'une quelconque des revendications précédentes.

13. Utilisation d'un procédé d'encapsulation de matrice, de préférence en utilisant une buse, de manière particulièrement préférée en utilisant une buse vibrante, pour la fabrication de particules composites avec une masse volumique apparente < 700 g/L, de préférence < 400 g/L, de manière particulièrement préférée < 300 g/L, lors de la fabrication d'éléments d'alimentation selon la revendication 12 pour l'industrie de la fonderie.

14. Utilisation de particules composites scellées se composant d'une particule composite pouvant être fabriquée au moyen d'un procédé d'encapsulation de matrice et d'une enveloppe entourant la particule composite et scellant celle-ci à partir d'un moyen de revêtement organique comme charge dans un élément d'alimentation selon la revendication 12, de préférence dans un élément d'alimentation fabriqué au moyen du procédé Cold-Box.

15. Procédé de fabrication de particules composites réfractaires avec une taille de particule de moins de 2 mm, déterminée par tamisage, avec les étapes suivantes :
(a1) la fabrication de gouttes d'une suspension à partir d'au moins les matériaux de départ suivants :
(i) une ou plusieurs substances réfractaires sélectionnées à partir du groupe se composant de
substances solides réfractaires à désigner selon DIN 51060 par réfractaires et précurseurs pour des substances solides réfractaires à désigner selon DIN 51060 par réfractaires,
(ii) une ou plusieurs substances réduisant la densité sélectionnées à partir du groupe se composant de
charges légères avec une masse volumique apparente respective dans la plage de 10 à 350 g/L, agents de soufflage et charges pyrolisables,
(iii) comme phase continue un liquide solidifiable,
(a2) la solidification du liquide solidifiable de sorte que les gouttes durcissent en gouttes durcies et la ou les substances réfractaires ainsi que la ou les substances réduisant la densité soient encapsulées dans la phase continue se solidifiant,
(a3) le traitement des gouttes durcies de sorte qu'il résulte lesdites particules composites, dans lequel le traitement est réalisé de sorte que la masse volumique apparente des particules composites résultantes soit inférieure à la masse volumique apparente des gouttes durcies dans l'état séché.

16. Utilisation de particules composites réfractaires pouvant être fabriquées par le procédé selon la revendication 15, comme constituant d'un élément d'alimentation.
